# EUROPEAN PATENT APPLICATION

(11) **EP 4 723 757 A1**
(43) Date of publication of application: **08.04.2026**
(21) Application number: 24204312.3
(22) Date of filing: 02.10.2024
(51) Int. Cl.: H04W 56/00

(54) **USER EQUIPMENT AND BASE STATION**

(71) Applicant: Panasonic Intellectual Property Corporation of America, Torrance, CA 90504 (US)
(72) Inventor: DHANANJAYA, Harshith, 63225 Langen (DE); SUZUKI, Hidetoshi, Osaka, 571-8501 (JP); KUANG, Quan, 63225 Langen (DE)
(74) Representative: Grünecker Patent- und Rechtsanwälte PartG mbB

(57) **Abstract**

The present disclosure relates to a user equipment comprising the following. Processing circuitry of the UE evaluates one or more trigger conditions for one or more mobility candidate cells or beams. In response to evaluating that a trigger condition for a mobility candidate cell or beam is fulfilled, the processing circuitry performs an early downlink synchronization with said mobility candidate cell or beam. The processing circuitry also determines whether to perform an early uplink synchronization or request an indication to perform an early uplink synchronization based on configuration information from a serving base station of the UE. In response to successfully completing the early downlink synchronization with said mobility candidate cells or beams and based on the determination, the processing circuitry performs the early uplink synchronization or requests the indication from the serving base station.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing a user equipment to perform an improved early synchronization procedure.

In an embodiment, the techniques disclosed here feature a user equipment comprising the following. Processing circuitry of the UE evaluates one or more trigger conditions for one or more mobility candidate cells or beams. In response to evaluating that a trigger condition for a mobility candidate cell or beam is fulfilled, the processing circuitry performs an early downlink synchronization with said mobility candidate cell or beam. The processing circuitry also determines whether to perform an early uplink synchronization or request an indication to perform an early uplink synchronization based on configuration information from a serving base station of the UE. In response to successfully completing the early downlink synchronization with said mobility candidate cells or beams and based on the determination, the processing circuitry performs the early uplink synchronization or requests the indication from the serving base station.

Additional benefits and advantages of the disclosed embodiments and different implementations will be apparent from the specification and figures. The benefits and/or advantages may be individually obtained by the various embodiments and feature1s of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: shows exemplary functional split options in 5G O-RAN,
- **Fig. 3**: illustrates a split architecture of a gNB,
- **Fig. 4 and 5**: illustrate the contention-based and contention-free RACH procedure;
- **Fig. 6**: is a signaling diagram for a handover involving a UE, a source gNB and a target gNB,
- **Fig. 7**: illustrates an exemplary conditional handover involving a UE, a source gNB and a target gNB,
- **Fig. 8**: illustrates a simplified procedure for LTM,
- **Fig. 9**: illustrates an exemplary implementation of an event-triggered early synchronization,
- **Fig. 10**: illustrates an exemplary and simplified structure of a communication device, such as UE, and a base station,
- **Fig. 11**: illustrates a structure of the communication device, such as the UE, according to an exemplary implementation of the improved early synchronization procedure,
- **Fig. 12**: illustrates a flow diagram for the UE behavior according to an exemplary implementation of the improved early synchronization procedure,
- **Fig. 13**: illustrates a structure of the communication device, such as the base station, according to an exemplary implementation of the improved early synchronization procedure,
- **Fig. 14**: illustrates a flow diagram for the base station behavior, according to an exemplary implementation of the improved early synchronization procedure,
- **Fig. 15**: is a signaling diagram illustrating an exemplary exchange between the UE and the gNB for an exemplary implementation of the improved early synchronization procedure,
- **Fig. 16**: illustrates a detailed implementation of the improved early synchronization procedure, based on performing early synchronization in the DL and UL autonomously at the UE,
- **Fig. 17**: illustrates another detailed implementation of the improved early synchronization procedure, which comprises the UE-autonomous DL and UL synchronization, and further comprising the UE-based TA calculation for early UL synchronization,
- **Fig. 18**: illustrates another detailed implementation of the improved early synchronization procedure, which is based on performing early synchronization in the DL autonomously at the UE while the early UL synchronization is gNB-controlled,
- **Fig. 19**: illustrates another detailed implementation of the improved early synchronization procedure, which comprises the UE-autonomous DL and UL synchronization, and where the early UL synchronization is performed based on a shortened RACH,
- **Fig. 20**: illustrates another detailed implementation of the improved early synchronization procedure, which is based on performing early synchronization in the DL autonomously at the UE while the early UL synchronization is gNB-controlled, and where the early UL synchronization is performed based on a shortened RACH,
- **Fig. 21**: illustrates a variant of the improved early synchronization procedure, in which RACH resources at the candidate cell are configured and deactivated and then dynamically activated for the early UL synchronization, and
- **Fig. 22**: illustrates another variant of the improved early synchronization procedure, in which a DL and UL synchronization status is transmitted from the candidate cell to the serving gNB of the UE.

### DETAILED DESCRIPTION

### 5G NR system architecture and protocol stacks

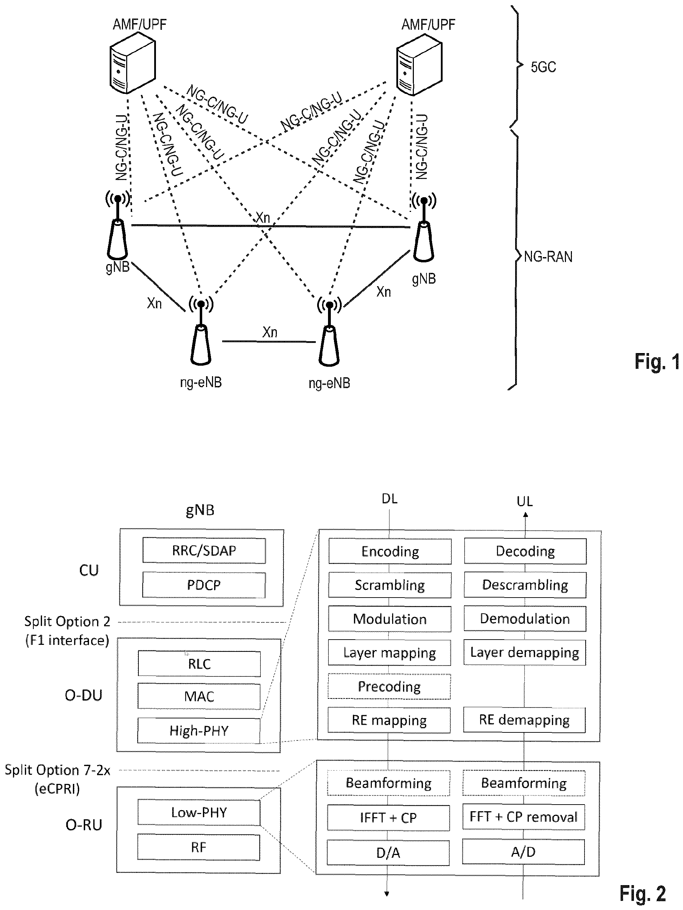

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v18.1.0, section 4).

### RRC connection setup and reconfiguration procedures

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

FIG. 2 illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Split gNB architecture

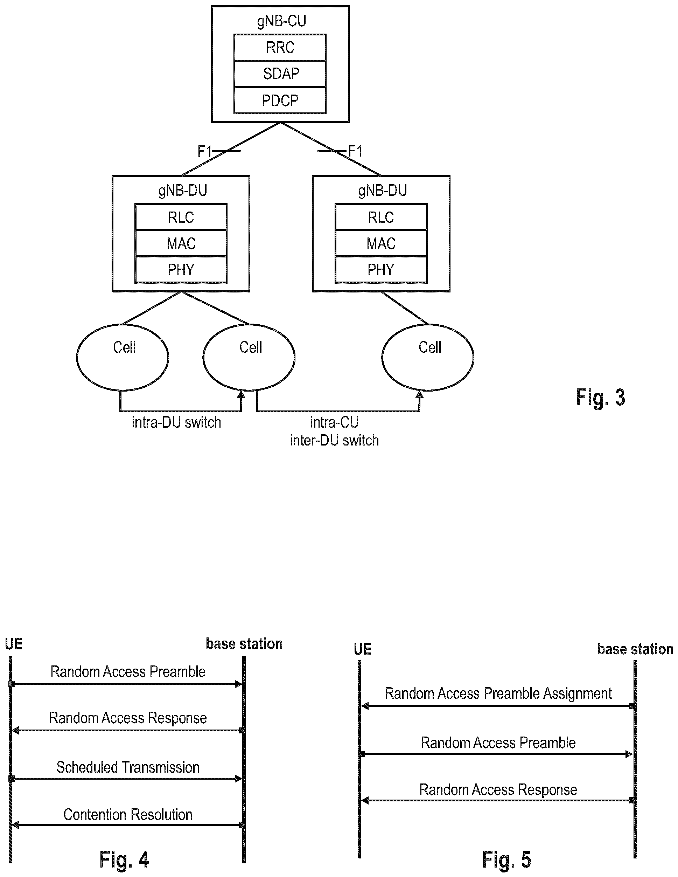

In the 3GPP standard, a gNB can be split into a gNB-CU (Central Unit) and one or more gNB-DUs (Distributed Units). This is illustrated in Fig. 3.

The gNB-CU is a logical node that provides support for the higher layers of the protocol stack such as SOAP, PDCP and RRC. On the other hand, the gNB-DU is a logical node that provides support for the lower layers of the protocol stack such as RLC, MAC and Physical layer. Also, note that SDAP layer will not be present if the CU is connected to a 4G Core network as the 5G core network would be available to support SOAP. Therefore, the PHY and MAC layers are terminated at the gNB-DU, while Layer 3 (RRC) is terminated at the gNB-CU.

In one example, there is a single CU for each gNB, i.e. one gNB-DU is connected to only one gNB-CU; alternatively, for resiliency, a gNB-DU may be connected to multiple gNB-CUs. One gNB-CU may control multiple gNB-DUs; for example more than 100 gNB-DUs can be connected to one gNB-CU. Each gNB-DU is able to support one or more cells, so one gNB can control hundreds of cells unlike the 4G BTS. One cell is supported by only one gNB-DU.

Also, note that the interface between CU and DU is named F1, and as per 3GPP, it should be an open interface. For NG-RAN, the NG and Xn-C interfaces for a gNB consisting of a gNB-CU and gNB-DUs, terminate in the gNB-CU. For EN-DC, the S1-U and X2-C interfaces for a gNB consisting of a gNB-CU and gNB-DUs, terminate in the gNB-CU. The gNB-CU and connected gNB-DUs are only visible to other gNBs and the 5GC as a gNB.

The gNB-CU/DU architecture is specified in more detail e.g. in 3GPP TS 38.401 v18.1.0, e.g. section 6.1. The F1 interface is specified in more detail e.g. in 3GPP TS 38.473 v18.1.0.

### Random Access procedure

Similar to LTE, 5G NR provides a RACH (Random Access Channel) procedure (or simply random access procedure). For instance, the RACH procedure can be used by the UE to access a cell it has found. The RACH procedure can also be used in other contexts within NR, for example:
- For handover, when synchronization is to be established to a new cell;
- To reestablish uplink synchronization to the current cell, if synchronization has been lost due to a too long period without any uplink transmission from the device;
- To request uplink scheduling, if no dedicated scheduling request resource has been configured for the device.

There are numerous events that may trigger the UE to perform a random access procedure (see 3GPP TS 38.300 v18.1.0, section 9.2.6).

A mobile terminal can be scheduled for uplink transmission if its uplink transmission is time synchronized. Therefore, the Random Access Channel (RACH) procedure plays a role as an interface between non-synchronized mobile terminals (UEs) and the orthogonal transmission of the uplink radio access. For instance, the Random Access is used to achieve uplink time synchronization for a user equipment, which either has not yet acquired, or has lost, its uplink synchronization. Once a user equipment has achieved uplink synchronization, the base station can schedule uplink transmission resources for it. One scenario relevant for random access is where a user equipment in RRC_CONNECTED state, handing over from its current serving cell to a new target cell, performs the Random Access Procedure in order to achieve uplink time-synchronization in the target cell.

The PRACH consists of a preamble format made up of one or more preamble sequences transmitted in a time-frequency resource. The UE transmits the PRACH preamble in a PRACH occasion (RO) which is a time-frequency resource that the network allocates for preamble transmission.

There can be at least two types of random access procedures, contention based random access (CBRA) procedure, and contention free random access (CFRA) procedure. In the CBRA procedure, multiple users randomly select a preamble from a pool of preambles; further, a contention resolution phase may then determine which user, if any, had its data successfully received by the network. Contention resolution resolves contention between two or more users selecting the same preamble. In the CFRA procedure, a preamble is uniquely pre-allocated to the user; hence, there is no possibility of preamble collision between users and no need for contention resolution. An exemplary definition of a random access procedure can be found in 3GPP TS 38.321, v18.1.0 section 5.1.

The RACH procedure will be described in the following in more detail, with reference to **Fig. 4** and **Fig. 5****.** In the following, the contention-based random access procedure is being described in more detail with respect to **Fig. 4****.** This procedure consists of four "steps" and thus can be termed for example as a 4-step RACH procedure.

First, the user equipment transmits a random access preamble on the Physical Random Access Channel (PRACH) to the base station (i.e. message 1, Msg1, of the RACH procedure). When the UE transmits the preamble to the gNB, it conveys the selected SS/PBCH block index to the gNB. The network configures the association between the SS/PBCH Block indices and the PRACH occasions and preamble indices by broadcast signaling.

In the second step, the gNB acknowledges the reception of the preamble by sending a random access response (RAR) on a PDSCH channel. The RAR is scheduled by a Downlink Control Information (DCI) with a CRC scrambled by the Random Access Radio Network Temporary Identifier (RA-RNTI) on the corresponding PDCCH. The PDCCH of the RAR is transmitted in Type1-PDCCH Common Search Space (CSS). The RA-RNTI is a function of the time and frequency of the PRACH occasion the preamble is detected (see 38.321).

The UE attempts to receive the RAR during the RAR window. The RAR window starts at the first symbol of the earliest CORESET (control resource set) of Type1-PDCCH CSS that starts at least one symbol after the PRACH occasion corresponding to the PRACH transmission. The RAR window size is configured in number of slots and is less than 10 ms. In case of CBRA, the DMRS port of the PDSCH channel carrying the RAR and the DMRS port of the corresponding PDCCH channel are quasi-co-located with the reference signal used for association and transmission of the corresponding preamble.

At the start of the random access procedure, the UE sets the PREAMBLE_TRANSMISSION_COUNTER to 1. If the UE doesn't receive the RAR during the RAR window with a RAPID (random access preamble identity) that matches the transmitted preamble, it increments the PREAMBLE_TRANSMISSION_COUNTER by 1 and retransmits the PRACH preamble after a back off period. After several PRACH preamble retransmissions attempts, when the PREAMBLE_TRANSMISSION_COUNTER exceeds higher layer parameter *preambleTransMax,* without receiving a RAR with a RAPID that matches the transmitted preamble, the Random Access Channel (RACH) procedure fails.

When the UE successfully decodes a RAR with a RAPID that matches the transmitted preamble and that includes a MAC RAR, the UE performs the following:
- It processes the received TA command.
- It processes the UL grant in the MAC RAR, and in response transmits a PUSCH (a.k.a. Msg3).

In the third step of the CBRA procedure, the UE transmits Msg3 on the Uplink Shared Channel (UL-SCH) on a PUSCH in response to the uplink grant of the RAR. Msg3 contains C-RNTI MAC CE if the UE triggering the CBRA procedure is in CONNECTED Mode with a C-RNTI, or it contains the CCCH SDU with the Contention Resolution Identity MAC CE. The trigger of the random access procedure, determines the content of Msg3. For example:
- During initial access, Msg3 contains RRCSetupRequest.
- During Radio Resource Control (RRC) re-establishment, Msg3 contains RRCReestablishmentRequest.
- To transition from the RRC_INACTIVE state to the RRC_CONNECTED state, Msg3 contains RRCResumeRequest or RRCResumeRequest1.
- To get system information, Msg3 contains RRCSystemlnfoRequest.
- During contention-based BFR Msg3 contains C-RNTI MAC CE.

After the UE transmits Msg3 it starts the ra-ContentionResolutionTimer and monitors the PDCCH channel. The UE can receive a PDCCH with a CRC scrambled by the TC-RNTI requesting a retransmission of Msg3, if the gNB didn't successful decode Msg3. When the UE retransmits Msg3, it restarts the ra-ContentionResolutionTimer after the Msg3 retransmission.

In the fourth step of the CBRA procedure, the gNB transmits a message to the UE.
- If Msg3 contained the C-RNTI MAC CE, the gNB transmits a PDCCH with CRC scrambled by the C-RNTI. Upon reception of this PDCCH, the UE stops ra-ContentionResolutionTimer and considers the CBRA procedure successful.
- If Msg3 contained the CCCH SDU, the gNB transmits a PDCCH scheduling a PDSCH with CRC scrambled by the TC-RNTI, indicated to the UE in the RAR. The corresponding PDSCH echoes back the contention resolution identity received in Msg3. Upon reception of the PDCCH scheduling a PDSCH and with CRC scrambled by the TC-RNTI, the UE decodes the corresponding PDSCH. If the contention resolution identity received in the PDSCH matches that transmitted in Msg3, the UE stops ra-ContentionResolutionTimer and considers the CBRA procedure successful and sends uplink Hybrid Automatic Repeat Request (HARQ) acknowledgement to the gNB to stop any further retransmissions of this message.
   ∘ Else when the contention resolution identity received in the PDSCH doesn't match that transmitted in Msg3, the UE stops ra-ContentionResolutionTimer and considers the Contention Resolution unsuccessful.

If the ra-ContentionResolutionTimer expires before the UE successfully receives the downlink message transmitted by the gNB, the UE considers Contention Resolution unsuccessful. If

Contention Resolution is unsuccessful, the UE increments the PREAMBLE_TRANSMISSION_COUNTER by 1 and restarts the random access procedure, with preamble selection, after a back off period. After several PRACH preamble retransmissions attempts, when the PREAMBLE_TRANSMISSION_COUNTER exceeds higher layer parameter preambleTransMax, without successful completing the random access procedure, the RACH procedure fails.

Fig. 5 is illustrating the contention-free random access procedure, which is simplified in comparison to the contention-based random access procedure. The base station provides in a first step the user equipment with the dedicated preamble to use for random access so that there is no risk of collisions, i.e. multiple user equipments transmitting the same preamble. Accordingly, the user equipment subsequently sends the preamble that was signaled by the base station in the uplink on a PRACH resource. Since the case that multiple UEs are sending the same preamble is avoided for a contention-free random access, essentially, a contention-free random access procedure is finished after having successfully received the random access response by the UE.

In more detail, the UE-dedicated preamble assignment determines:
- The preamble index.
- The mask index to determine the PRACH Occasion(s) to use for preamble transmission within the set of PRACH occasions associated with the SS/PBCH Block or the channel-state information reference signals (CSI-RS) used for preamble transmission. The UE transmits on a preassigned preamble index and PRACH occasion(s) associated with a reference signal (SS/PBCH block or CSI-RS) that exceeds a higher layer configured threshold rsrp-ThresholdSSB or rsrp-ThresholdCSI-RS.

As the preamble is preassigned by the network, there is no contention resolution phase. As the preamble is dedicated, it also identifies the UE to gNB. The random access procedure is considered successful after reception of a RAR with a RAPID that matches the transmitted preamble.

3GPP also defines a 2-step (contention-based) RACH procedure for 5G NR, where a message 1 (termed as MsgA), that corresponds to messages 1 and 3 in the four-step LTE/NR RACH procedure, is transmitted at first. The MsgA of the 2-step RACH type includes a preamble on the Physical Random Access Channel (PRACH) and a payload on the Physical Uplink Shared Channel (PUSCH). After MsgA transmission, the UE monitors for a response from the gNB within a configured time window. Then, the gNB will respond with a message 2 (termed as MsgB), corresponding to messages 2 and 4 of the 4-step LTE/NR RACH procedure. This MsgB can include e.g. a Success random access response (RAR), a Fallback RAR, and optionally a backoff

indication. If contention resolution is successful upon receiving the Success RAR, the UE ends the random access procedure; while if Fallback RAR is received in MsgB, the UE performs message 3 transmission (as in 4-step RACH procedure) and monitors contention resolution. Some further exemplary assumptions are made for the 2-step RACH procedure, such as that the UE, after deciding on the RACH type (e.g. the 2-step RACH), keeps retrying that same RACH type until failure. But there may be also the possibility that the UE can switch to the 4-step RACH procedure after certain reattempts of transmitting MsgA.

Both CBRA and CFRA procedures are possible in 2-step RA type too.

### Handover procedure

Handover is a mobility procedure, which involves transferring an ongoing communication session of a UE from one cell (e.g. base station, gNB) to another cell, so as to allow seamless connectivity and continuity of service for the user while the user is moving.

In one example, mobility can be beam-level mobility or cell-level mobility. Beam-level mobility can be within a cell, or between cells (e.g. inter-cell beam management, ICBM). The gNB provides the UE with a measurement configuration for triggering channel and interference measurements and reports. Beam-level mobility is then dealt with a lower layers, e.g. by means of physical layer (PHY) and medium-access control (MAC) layer control signaling, and the UE does not need explicit RRC signaling to change to a target beam. Cell-level mobility on the other hand is based on RRC signaling to be triggered.

5G NR supports different types of handover, where a basic handover is based on the network controlling UE mobility based on UE measurement reporting. In this basic handover, a source gNB triggers a handover by sending a handover request to a target gNB, and after receiving a handover acknowledgement back, the source gNB initiates a handover with the UE by sending a handover command with the target cell configuration. The UE may then access the target cell after the target cell configuration is applied.

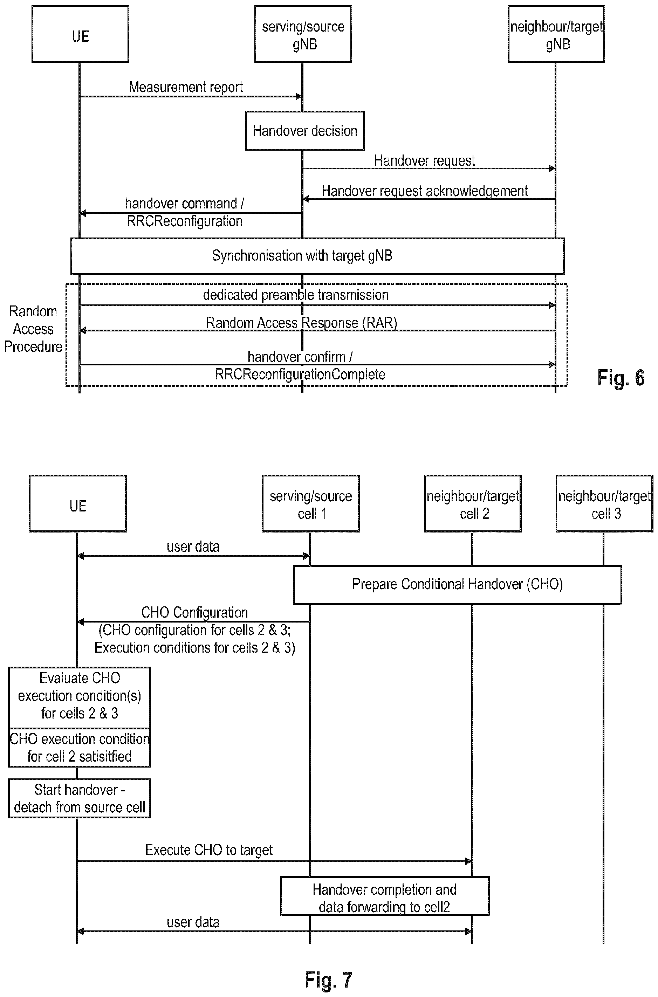

A typical and simplified handover is illustrated in **Fig. 6** and explained briefly in the following. A handover of a UE involves that a source base station makes the decision whether to hand over the UE from a source/serving gNB to a neighbour/target gNB (target radio cell). The decision is typically made by a source gNB, e.g., based on measurement results from the UE. The measurement results may be carried in one or more measurement reports, e.g., in the measurement report as illustrated in Fig. 6. Measurement reports are transmitted by the UE to assist the source cell with the handover procedure.

The handover is then prepared (preparation phase) between the two involved base stations, that is a source base station (herein may be interchangeably used with source gNB, source cell) and a target base station (herein may be interchangeably used with target gNB, target cell). The source gNB may transmit a handover request message to the target base station, which in turn may respond with a Handover request acknowledgement message so as to implement the preparation phase. Such a preparation phase allows a neighbour cell to decide whether it has the capacity to accept a further UE (e.g., acknowledging the handover) and reserving resources for the UE to be handed over.

Then, in the execution phase, the UE is instructed through a handover command message (e.g., an RRCReconfiguration message) to switch from the source cell to the target cell, which for example involves reconfiguration of the UE's radio resources so as to establish a connection with the target base station of the target radio cell. The UE accordingly performs the reconfiguration and attaches to the new target base station, which e.g. comprises a downlink synchronization and performing a (e.g., contention-free) random access procedure. For instance, the downlink synchronization may comprise that the UE acquires the synchronization signals (e.g., Primary Synchronization Signal, PSS, and Secondary Synchronization Signal, SSS) typically used to obtain the cell identity and frame timing of the target cell, thereby eventually achieving time and frequency synchronization in the downlink. The random access procedure is performed by the UE, e.g., in order to acquire the timing advance value (uplink synchronization) and to obtain uplink resources for uplink transmission with the RAR message. For instance, it consists at least in transmitting the RACH preamble (e.g., a dedicated preamble, in line with what the preamble indicated in the handover command message for a contention-free RACH), the reception of the Random Access Response message (e.g., including an uplink grant), and finally as the third and last step of the random access procedure, the UE confirms that is has completed the reconfiguration and access to the target cell by transmitting a handover confirm message (RRCReconfigurationComplete message) to the target gNB. Alternatively, the RACH procedure could also be considered to be part of the Synchronization with the target gNB.

An exemplary implementation of such a handover procedure is defined for 5G NR for RRC Connected mobility in the 3GPP Technical Standard TS 38.300 v18.2.0, e.g. section 9.2.3.2.

The handover command message may include information of the target cell, such as the target cell ID and configuration information to be able to connect the target cell, as well as handover-accept and handover-reject conditions.

### Handover and Random Access

As presented above, the handover procedure may comprise a DL synchronization and UL synchronization (e.g. with RACH procedure) when attaching to the new target cell. Accordingly, when one of the CHO execution conditions is satisfied at the UE, the UE may start the CHO execution, including a synchronization procedure with the target cell.

In one exemplary implementation, the RACH procedure during handover may involve DL synchronization using SSB reference signal of the target cell and UL synchronization using preamble transmission to obtain the timing advance (TA) value, to transmit the first UL data towards the target cell.

A RACH-less UE entry during handover towards the target cell is possible by shifting the DL and UL synchronization to an earlier point in item (before an execution condition is satisfied) such that the TA (Timing Advance) value is available for the first UL data sent towards the target cell. For example, once the early RACH procedure is successful, the target gNB (or target cell) reserves UL resources for the first UL data expected from the UE. Since the synchronization is shifted earlier, the synchronization overhead during the handover procedure is reduced.

A RACH-less execution, i.e. attaching to the new target cell without the UE and target cell performing a RACH procedure after the handover process has been initiated by the UE towards the target cell, is not supported in the legacy CHO procedure. Consequently, synchronizing to the new target cell using the RACH procedure increases the overall handover latency during mobility.

### Conditional Handover - CHO

In the handover procedure presented above, the gNB is in charge of making the decision whether the handover should be performed or not. This handover procedure is a reactive process and prone to resulting in handover failures. For instance, it can happen that when the radio link becomes degraded and the mobile terminal needs to send measurement reports, the measurement reports never reach the network. Or, even if they do, the network tries to respond with a handover command that may never reach the mobile terminal, either because the downlink-is degraded and/or the handover command is so large that it requires multiple transmissions.

One important mobility enhancement specified by 3GPP as of Rel-16, is *"Conditional Handover* (CHO)", which is a handover procedure controlled by the network but initiated and executed by the UE when one or more handover execution conditions are satisfied. The CHO allows to reduce the number of failure occurrences while a user is moving, for example, when a handover between cells fails or when a connection fails even before a handover (HO) is triggered. CHO thus improves mobility robustness for the handover. Furthermore, it allows reducing signaling and reducing the handover delay. CHO can be used to change the PCell, either for a UE without Dual Connectivity or for a master cell group for a UE with Dual Connectivity. In DC (Dual Connectivity) a PCell change procedure can be performed to change the PCell of a Master Cell Group.

Because of the usefulness, CHO has been considered for many areas where cellular communication is applied, including e.g., Mobile Broadband (MBB), in Non-Terrestrial Networks (NTN), in Integrated Access Backhaul, and NR-Unlicensed.

In a conditional handover, the mobile terminal receives from the source gNB a handover command, (which is e.g., an RRCReconfiguration message) which contains conditional configuration information prepared by a potential target candidate cell). When received, the mobile terminal stores the configuration of the handover command, instead of applying it immediately as in the legacy handover. Together with the handover command, the mobile terminal also receives associated handover execution condition(s) to be monitored by the mobile terminal. The mobile terminal only applies the stored command when the handover execution condition(s) is(are) satisfied. Then, the mobile terminal executes the handover and connects to the target node as in a normal handover.

An exemplary and basic CHO procedure is illustrated by the signaling diagram of **Fig. 7****.** As apparent, the source cell prepares the CHO with the target cells. The target cell gNB can provide the corresponding target-cell-specific configuration parameters to the source cell gNB. The source gNB sends a CHO command to the UE comprising the target cell configurations and execution conditions for the target cells. For instance, a CHO configuration may comprise candidate cell configurations along with corresponding execution conditions, which are sent to the UE by the source cell, earlier when the signal quality is still good. In one example, a CHO execution condition may comprise of one or more event trigger conditions, which the UE starts evaluating upon receiving the CHO configurations.

Upon reception of the CHO command, the UE does not immediately detach from the source cell (unlike in the legacy handover), but instead the UE continues exchanging UL and DL data with the source gNB, until the CHO execution condition is met. Once the execution condition for the target cell 2 is fulfilled, the UE initiates the CHO execution toward the target cell while detaching from the source cell (e.g., in the same or similar manner as in the legacy handover).

The handover execution conditions are evaluated for instance based on measurements performed by the UE on one more candidate cells as defined by the network and configured to the UE during the configuration phase.

The CHO is more robust against failures, compared to the standard handover procedure, in which the handover is dependent on network-transmitted commands that are normally sent when the source gNB conditions are already degraded / deteriorated.

The above mentioned events for the CHO execution conditions specify certain triggering criteria, which are used by the UE for UE-initiated procedures, such as the Condition handover. The Event trigger conditions can be specific to measurement types, of which a few basic ones are Radio quality/quantity measurements, Distance-based measurements and Time-base measurements.

### Lower-layer-Triggered Mobility LTM

In some handovers, the serving cell change is triggered by Layer 3 (L3) measurements and done by RRC signaling (e.g. RRCReconfiguration). This requires reconfiguration of upper layer (such as RRC or PDCP) and possibly also resetting of the lower layer (such as MAC or PHY), which leads to a longer latency, to a larger overhead and a longer interruption time than beam-level mobility.

Rel. 18 has introduces Layer 1 (L1)/Layer 2(L2)-based mobility, also known as lower-layer-triggered (LTM) mobility to enable a serving cell change via L1/L2 signaling, while keeping configuration of the upper layer and/or minimizing change of configurations of the lower layers. This assists in reducing latency, overhead and interruption time during the handover. LTM mobility may support both intra-distributed unit (DU) and intra-central unit (CU)-inter-DU mobility. During the LTM mobility, the user plane is continued whenever possible without reset, with the target cell to avoid data loss and the additional delay of data recovery.

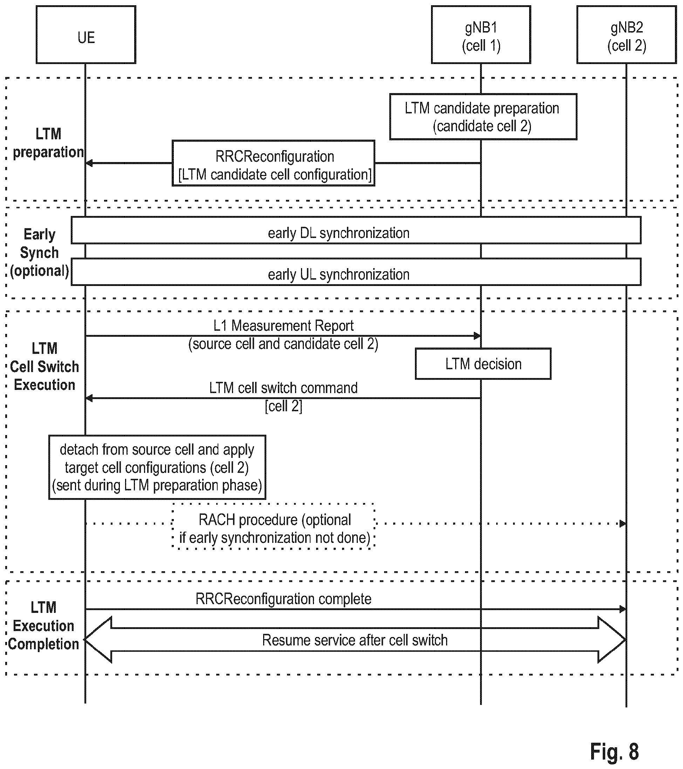

An exemplified and simplified procedure for LTM is illustrated in **Fig. 8****.**

The LTM mobility procedure can be separated into four stages of operations: LTM preparation, early synchronization, cell switch execution, and LTM execution completion. Early synchronization with one or more candidate cells can be triggered even before the actual cell switch (or handover) decision. This may facilitate and expedite the cell switch operation by reducing the synchronization overhead during the cell switch (handover). While Rel. 18 LTM is limited to intra-gNB, Rel. 19 LTM will support inter-gNB uses cases, for greater usability in the mobility applications.

L1 and/or L3 measurements reporting can be configured at the UE to assist in the mobility decisions. The UE may be configured with a measurement configuration with a list of reference signals (or measurement channels) to evaluate cells or beams and to generate corresponding L1 or L3 measurement results to be reported. The UE may also be configured with a reporting configuration, defining radio resources and reporting channels (e.g. PUCCH, PUSCH, MAC CE, etc. for L1 reporting and RRC for L3 reporting), so as to allow reporting the previously-generated measurement results to the network. There are different types of measurement reporting, such as periodic, aperiodic, semi-persistent or event-triggered.

The event-triggered configurations define trigger conditions (also termed event conditions) based on measurement quality and quantities (e.g. beam level events or cell-level events) to trigger measurement reporting when such event conditions are satisfied. In one example implementation, one or more entering conditions are configured as to when network expects measurement results for handover decisions such as early synchronization and cell switch. Leaving conditions are configured as to when network expects to eliminate cells/beams from event triggered criteria as encountered during entering condition.

For the Rel. 19, enhancements are intended for LTM, focussing on event-triggered measurement reporting, as to enhance the overall reporting performance and radio resource utilization efficiency.

Furthermore, for Rel. 19, conditional LTM shall be supported. Similar to normal LTM procedure, the conditional LTM procedure may consist of a list of candidate cells sent to the UE along with event-trigger conditions (or conditional even configurations) on the basis of which the UE decides to switch from a source cell to one of the candidate cells, without having to wait for a cell switch command from the network.

### Event-triggered early downlink and uplink synchronization

Moreover, Rel. 19 is intended to support that the LTM event-triggered L1 measurement reporting procedure should be designed for triggering early synchronization with one or more candidate cells or beams. In more detail, in one example, the UE evaluates event trigger conditions to identify candidate cells or beams, which could be a potential candidate cell or beam for LTM (or condition LTM) decisions. For example, the UE may identify candidate cells or beams for specifically performing early synchronization or for executing a cell switch for LTM (or for conditional LTM).

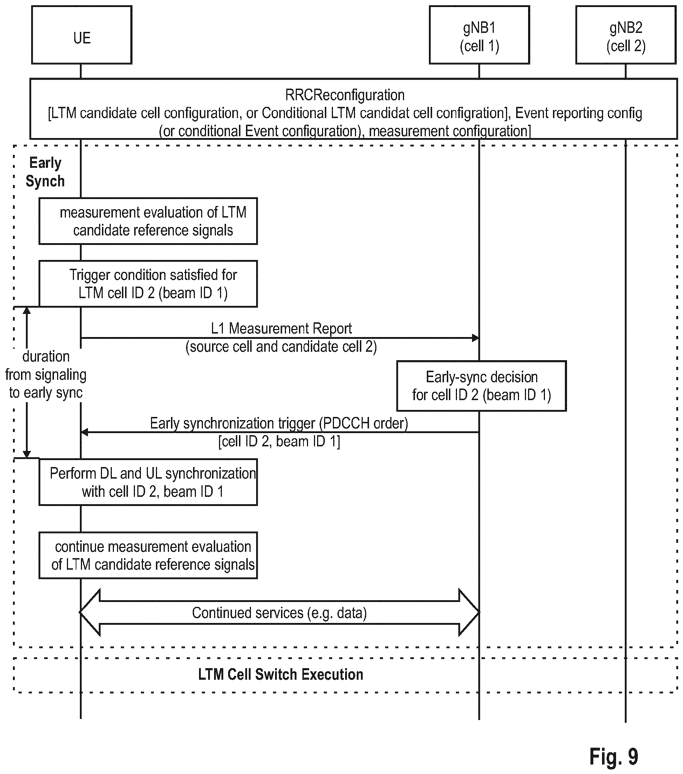

Fig. 9 illustrates an exemplary implementation of an event-triggered early synchronization procedure, e.g. as part of a normal LTM procedure (see Fig. 8) or a conditional LTM procedure. The UE reports evaluated measurement results to the network and can accordingly wait to be triggered for the corresponding early synchronization decision (before the cell switch or conditional cell switch).

After receiving the L1 (or L3) measurements results from the UE, the source gNB then performs the LTM decision. It is exemplarily assumed that the source gNB decides to perform early synchronization and correspondingly sends an early synchronization trigger to the UE, e.g. using a PDCCH-order command over DCI.

Such an event-triggered early synchronization as presented above however has some disadvantages as will be explained in the following.

Additional signaling is required in the downlink and uplink for the source gNB to trigger the early downlink and uplink synchronization for the same set of cells and beams that were already evaluated by the UE for triggering the transmission of the measurement report.

When a large number of cells (or a large number of beams per cell) are configured for an event-triggered early synchronization, the number of measurement reports and subsequent early synchronizations trigger may increase accordingly and additional radio resources are occupied. For instance, while Rel. 18 LTM supports configuring up to 8 candidate cells within the LTM candidate configuration, Rel. 19 LTM is expected to support more cells, particularly considering the goal of supporting inter-CU LTM. For an exemplary scenario with 5 cells and 4 beams per cell, a total of 20 beams could be triggered for early synchronization.

In summary, such an event triggered early synchronization procedure could cause signaling overhead, especially in scenarios with a large number of cells or beams per cell.

Moreover, there can be a significant delay between the point in time in which the UE determines that the event-trigger conditions are fulfilled for triggering the measurement report transmission to the source gNB and the point of time in which the UE is triggered to perform the early downlink and uplink synchronization in response to the early-synchronization trigger (see Fig. 9). This delay is generally detrimental, but particularly in scenarios in which the radio conditions change rapidly and dynamically. Due to rapidly changing radio conditions, the early DL/UL synchronization might no longer be necessary for candidate cells for which the radio conditions significantly deteriorated during said delay.

Also, in such scenarios, triggering (or re-triggering) of the early synchronization may occur often for new candidate cells or beams, respectively with the consequence of causing the further DL and UL signaling between the UE and the source gNB.

Furthermore, in case inter-frequency reference signals are configured for the measurement evaluation of candidate cells (inter-frequency cells), the UE might have to change the carrier (radio) frequency once for the measurement evaluation of the event conditions and then again when performing the early synchronization (after being triggered by the network). In the meantime, the UE might change the carrier (radio) frequency back to the initial carrier radio frequency. Switching (tuning) back and forth between the radio parameters adds complexity and processing at the UE and may further result in frequent interruptions to the communication with the serving cell.

The time delay is also detrimental in scenarios where the radio conditions are changing dynamically for the following reason. After the UE reports the measurement results for early synchronization, the UE might immediately get triggered for a cell-switch event trigger condition before the network has time to trigger the UE to perform early synchronization. Then, the network may be forced to continue with a RACH-based cell switch procedure (rather than a RACH-less-based cell switch procedure), because it was too late to trigger early DL/UL synchronization.

Similarly, for conditional LTM, if the UE evaluates that cell-switch criteria are satisfied, the UE would have to wait for the network to trigger early synchronization first. The UE may thus encounter a 'too late' situation, and instead, the UE may have to decide to switch cells using RACH-based conditional LTM procedure (rather than a RACH-less-based cell switch procedure).

### Further Improvements

The inventors thus have identified the possibility to define improved early synchronization procedures and parts thereof, which facilitate avoiding one or more of the above described disadvantages. The present invention relates to different solutions and variants for such improved early synchronization procedures.

In the following, UEs, base stations (e.g. distributed unit and central unit thereof), integrated circuits and respective procedures to meet these needs will be described for the new radio access technology envisioned for the 5G mobile communication systems, but which may also be used in previous LTE-based mobile communication systems or future (e.g. 6G) mobile communication systems. In particular, while 3GPP is currently developing Rel. 18 and 19 of the 5G (-Advanced) mobile communication system, 3GPP has already started planning for the next generation, 6G, of communications systems.

Different implementations and variants of the improved early synchronization procedure will be explained. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems (e.g. 6G) may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment** (UE) or **communication apparatus** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

The base station can be implemented exemplarily in a split architecture (see Fig. 3), according to which a gNB can be split into a gNB-CU (Central Unit) providing support for the higher layers (e.g. RRC) and one or more gNB-DUs (Distributed Units) providing support for the lower layers (e.g. MAC, PHY).

Communication between the UE and the base station is typically standardized and may be defined by different layers, such as PHY, MAC, RRC etc. (see above background discussion).

The expression **"mobility candidate cell or beam"** is to be understood in the context of mobility of a UE between cells (called e.g. mobility candidate cell, or simply candidate cell) or between beams (e.g. of one or more cells) (called e.g. mobility candidate beam, or simply candidate beam). A mobility candidate cell or beam may form a combination (a cell/beam combination) in the sense that mobility is between cells or beams, but at least the beam is changed. A radio cell may have two or more beams, in which case the UE may perform a handover to another beam of the same cell, such that the cell stays the same while only the beam is changed (*"or beam"*)*.* Even then, the UE may perform a handover to another cell and beam. On the other hand, a radio cell may have only one beam, in which case the cell and beam need not be differentiated for mobility. The mobility is thus from one cell / beam combination, to another cell / beam combination. Alternatively, the expression **"mobility candidate cell and beam"** is sometimes used synonymously, assuming that a beam and cell can be understood as a combination.

The term **"early"** in the expressions **"early DL synchronization"** and **"early UL synchronization"** is to be understood in the context of UE mobility. When actually switching to a target a cell or beam, a synchronization in the downlink and uplink is performed with said cell or beam, so as to facilitate correct downlink and uplink communication with said cell or beam (e.g. called normal DL / UL synchronization); otherwise, the UE communication exchange with said cell or beam may not be possible. An "early *DL* / *UL synchronization"* on the other hand is not necessarily part of the cell switch or handover but is performed at an earlier point in time, e.g. during preparation for a potential later cell switch or handover, thereby facilitating to avoid a time delay caused by the normal DL / UL synchronization. Therefore, a UE, after performing the early DL and/or UL synchronization, stays connected to its source cell and continues exchanging data with said source cell. On the other hand, a UE, after performing the normal DL and/or UL synchronization for a cell switch or handover, switches the connection to a target cell and continues exchanging data with said target cell.

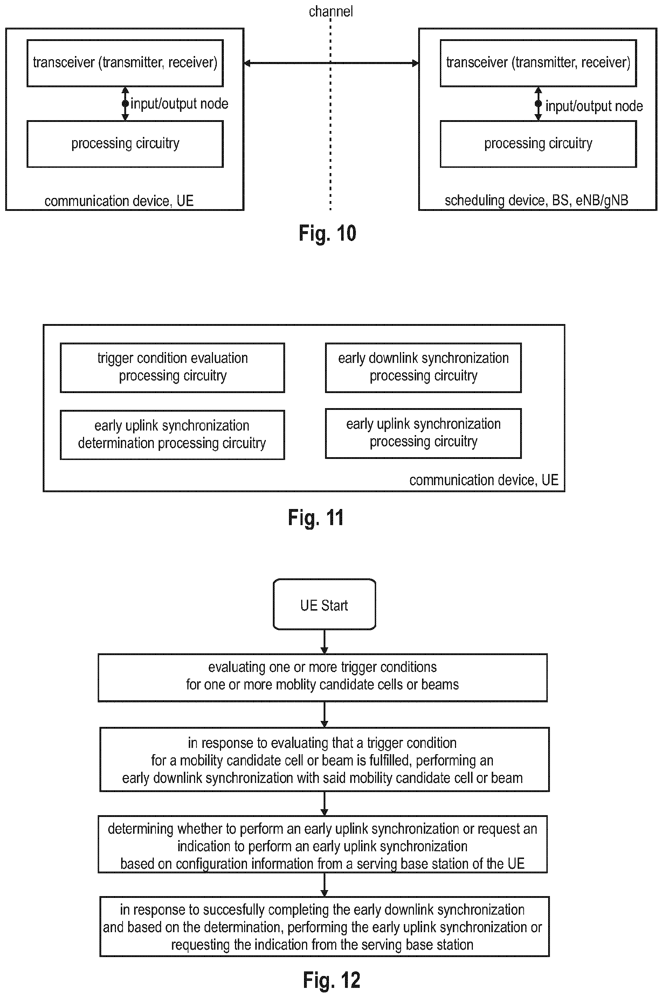

Fig. 10 illustrates a general, simplified and exemplary block diagram of a user equipment (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. In one example, the receiver may be responsible for performing the process of receiving and other processes related thereto, such as monitoring a channel.

The present disclosure relates to different solutions (and respective variants) of an improved early synchronization procedure. Improved UEs, improved base stations and improved integrated circuits are presented in connection therewith, which participate separately or together in the improved early synchronization procedures. Corresponding methods for the UE behavior and the base station behavior are provided as well. The integrated circuits may correspond to the UE and base station, and respectively their behavior.

**Fig. 11** illustrates a simplified and exemplary UE structure according to a basic implementation of the improved early synchronization procedure presented in more detail below. In one example, the UE structure can be implemented based on the general UE structure explained in connection with Fig. 10. The various structural elements of the UE illustrated in said Fig. 11 can be interconnected between one another e.g., with corresponding input/output nodes (not shown) e.g., in order to exchange control and user data and other signals. Although not shown for illustration purposes, the UE may include further structural elements.

As apparent from Fig. 11 the UE may include trigger condition evaluation processing circuitry, early downlink synchronization processing circuitry, early uplink synchronization determination processing circuitry, and early uplink synchronization processing circuitry.

The processing circuitry of the general UE structure of Fig. 10 can be implemented as the above trigger condition evaluation processing circuitry, early downlink synchronization processing circuitry, early uplink synchronization determination processing circuitry, and early uplink synchronization processing circuitry of Fig. 11, and can also perform further functions as will be become apparent from below. The transceiver of Fig. 10 can function and assist the above circuitry, and can also perform further functions as will become apparent from below.

One exemplary procedure is implemented by a UE that includes the following. Processing circuitry of the UE evaluates one or more trigger conditions for one or more mobility candidate cells or beams. In response to evaluating that a trigger condition for a mobility candidate cell or beam is fulfilled, the processing circuitry performs an early downlink synchronization with said mobility candidate cell or beam. The processing circuitry also determines whether to perform an early uplink synchronization or request an indication to perform an early uplink synchronization based on configuration information from a serving base station of the UE. In response to successfully completing the early downlink synchronization with said mobility candidate cells or beams and based on the determination, the processing circuitry performs the early uplink synchronization or requests the indication from the serving base station.

A corresponding exemplary method comprises the following steps performed by a UE:
evaluating one or more trigger conditions for one or more mobility candidate cells or beams,
in response to evaluating that a trigger condition for a mobility candidate cell or beam is fulfilled, performing an early downlink synchronization with said mobility candidate cell or beam, and
determining whether to perform an early uplink synchronization or request an indication to perform an early uplink synchronization based on configuration information from a serving base station of the UE,
in response to successfully completing the early downlink synchronization with said mobility candidate cells or beams and based on the determination, performing the early uplink synchronization or requests the indication from the serving base station.

A corresponding sequence diagram for an exemplary UE behaviour in line with the above-discussed UE and UE method is presented in **Fig. 12****.**

The above-described improved early synchronization procedure at the UE facilitates achieving the objective and overcoming at least some of the drawbacks explained above. According to the above solution, the UE first performs the evaluation of trigger conditions and may then perform the early downlink synchronization in response to evaluating that a trigger condition for a mobility candidate cell or beam fulfilled. The early downlink synchronization can thus be performed autonomously at the UE side, without requiring any further indication or instruction from the network side (called in the following e.g. UE-autonomous early DL synchronization). Consequently, no additional signaling is required in the downlink from the network, e.g. from the source gNB, to trigger the early downlink synchronization at the UE. This facilitates reducing the UL and DL overhead.

With respect to the early uplink synchronization, the above solution on the other hand is based on configuration information, which is previously provided to the UE. The UE considers the configuration as to whether the UE may directly start the early uplink synchronization in response to successfully completing the early downlink synchronization (called in the following UE-autonomous early UL synchronization) or whether the UE first needs to request a corresponding indication from the network side (called in the following gNB-controlled early UL synchronization). As a result, the solution is flexible and remains under control of the network, which can determine and update the intended UE behaviour as required.

When configuring the UE to directly start the early UL synchronization in response to the successful completion of the early DL synchronization, the early UL synchronization can thus be performed autonomously at the UE side, without requiring any further indication or instruction from the network side, which facilitates reducing the UL and DL overhead. Further, an additional time delay for starting the early UL synchronization can be avoided as well. Configuring the UE to perform early UL synchronization (in addition to the autonomous DL synchronization) autonomously is especially beneficial in scenarios in which a large number of cells (or a large number of beams per cell) are configured for an event-triggered early synchronization or in which the channel conditions change dynamically.

In case of inter-frequency reference signals, the UE, after evaluating the trigger conditions at these different frequencies, can autonomously perform at least the early DL synchronization (and possibly also the early UL synchronization, if so configured), without necessarily tuning back to the initial carrier frequency. This avoids the processing of switching back and forth between the carrier frequency and the different frequency and thus facilitates avoiding communication interruptions.

Moreover, because the UE autonomously performs the early DL synchronization (and possibly also the early UL synchronization, if so configured), "too-late" situations may be avoided, especially for conditional LTM.

When following a configuration in which the UE first has to request a corresponding indication from the network, the source gNB maintains control as to whether the UE performs the early UL synchronization and also with which mobility candidate cells. For instance, the source gNB may not transmit a corresponding early uplink synchronization trigger to the UE at all (or a negative response). Even if the event trigger conditions would be fulfilled with a plurality of mobility candidate cells or beams, the source gNB may decide that performing early UL synchronization is not necessary for one or more of these mobility candidate cells and thus may instruct the UE to perform early UL synchronization with only a subset of those triggered mobility candidate cells or beams. For instance, the source gNB may have or obtain knowledge about the status of neighboring cells and beams (e.g. network conditions such as congestion) or might even directly request neighboring cells on whether early UL synchronization is to be performed. The UE might be configured to attempt early UL synchronization autonomously to less congested cells (e.g. lower load on a cell), while for more congested cells the UE is configured to perform only autonomous early DL synchronization but to perform a gNB-controlled early UL synchronization. In any case, the source gNB can avoid that the UE performs early UL synchronization in scenarios in which it is not necessary or may lead to uplink synchronization failure. Depending on the implementation of the early UL synchronization, this facilitates avoiding signaling overhead in the downlink and uplink as well as avoiding processing at the UE and other entities of the network, such as the candidate cells.

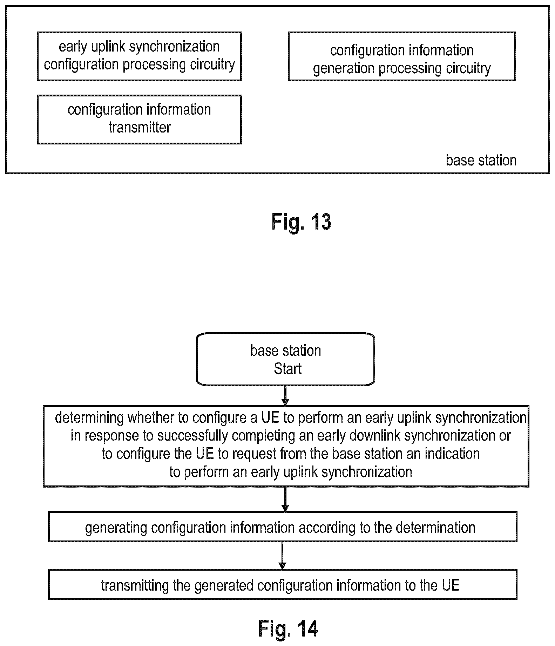

**Fig. 13** illustrates a simplified and exemplary base station structure according to an exemplary implementation of the improved early synchronization procedure, which can be implemented based on the general base station structure explained in connection with Fig. 10. The various structural elements of the base station illustrated in said Fig. 13 can be interconnected between one another e.g., with corresponding input/output nodes (not shown) e.g., in order to exchange control and user data and other signals. Although not shown for illustration purposes, the base station may include further structural elements.

As apparent therefrom, the base station comprises an early uplink synchronization configuration processing circuitry, configuration information generation processing circuitry, and a configuration information transmitter.

The processing circuitry of the general base station structure of Fig. 10 can be implemented as the above early uplink synchronization configuration processing circuitry and configuration information generation processing circuitry of Fig. 13, and can also perform further functions as will be become apparent from below. The transceiver of Fig. 10 can function as the above configuration information transmitter of Fig. 13, and can also perform further functions as will become apparent from below.

One exemplary procedure is implemented by a base station that includes the following. Processing circuitry of the base station determines whether to configure a user equipment to allow the UE to perform an early uplink synchronization in response to successfully completing an early downlink synchronization with mobility candidate cells or beams or to configure the UE to request an indication to perform an early uplink synchronization from the base station. The processing circuitry generates configuration information according to the determination. A transceiver of the base station transmits the generated configuration information to the UE.

A corresponding exemplary method comprises the following steps performed by a base station:
determining whether to configure a user equipment to allow the UE to perform an early uplink synchronization in response to successfully completing an early downlink synchronization with mobility candidate cells or beams or to configure the UE to request an indication to perform an early uplink synchronization from the base station,
generating configuration information according to the determination, and
transmitting the generated configuration information to the UE.

A corresponding sequence diagram for an exemplary base station behaviour in line with the above-discussed base station and base station method is presented in **Fig. 14****.**

The above-described improved early synchronization procedure at the base station facilitates achieving the objective and overcoming at least some of the drawbacks explained above. The base station is responsible to control the UE behaviour with regard to the early uplink synchronization, by first determining the intended UE behaviour and then configuring the UE behaviour accordingly. In particular, the UE may be configured to either directly start the early uplink synchronization in response to successfully completing the early downlink synchronization or to first request a corresponding indication from the network side. As a result, the solution is flexible and remains under control of the network, which can determine and update the intended UE behaviour as required.

As presented above in connection with the improved UE, when configuring the UE to perform a UE-autonomous early UL synchronization, UL and DL signaling overhead and delays can be reduced. For inter-frequency mobility, UE processing and communication interruptions can be avoided. Also, "too-late" situations may be avoided e.g. for conditional LTM.

When configuring the UE to first request an indication from the gNB before performing UL synchronization, the UE may be prevented to perform early UL synchronization in scenarios in which it is not necessary or may lead to uplink synchronization failures.

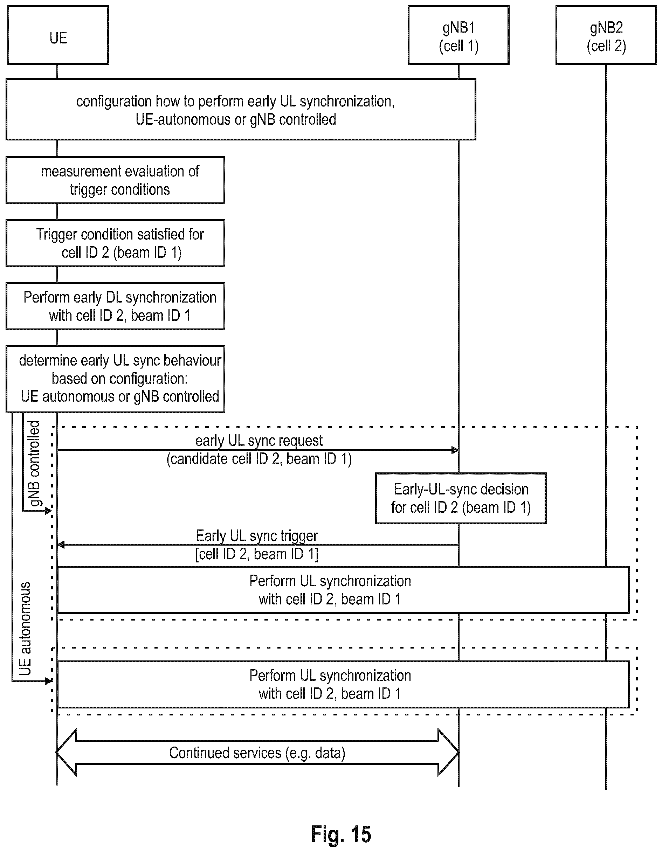

**Fig. 15** is a signaling diagram of an exemplary and simplified implementation of the improved early synchronization procedure, illustrating the exchange of messages between the different participating entities (here the UE and the gNBs) and the steps performed at these entities. The UE behaviour and gNB behaviour follow the above described UE and base station and the respective methods.

As apparent from Fig. 15, the UE is communicating with its serving gNB1 (source gNB for mobility). It is assumed that the gNB1 is responsible for configuring the UE behaviour regarding the early UL synchronization, particularly whether the early UL synchronization is UE-autonomous or gNB-controlled.

It is exemplary assumed that there is another radio cell controlled by gNB2 (cell ID 2) with at least one beam (beam ID 1).

It is further assumed that the UE is configured in advance with trigger conditions, which the UE monitors to determine whether to perform early synchronization with one or more mobility candidate cells or beams. In said respect, the UE performs measurements on the mobility candidate cells or beams to evaluate whether a trigger condition is fulfilled.

Eventually, it is assumed that a trigger condition is evaluated to be fulfilled for at least the beam with ID 1 of the neighbour cell 2. Consequently, the UE identifies said beam of cell 2 as a potential target for mobility. The UE proceeds to perform an early DL synchronization with said mobility candidate cell and beam, for which the trigger condition was evaluated to be fulfilled. It is exemplary assumed that the UE successfully completes the early DL synchronization with beam 1 of cell 2.

With respect to the early UL synchronization, the UE follows the previous configuration. Fig. 15 illustrates that the determination by the UE regarding its early-UL-synchronization behaviour is performed after the early DL synchronization. However, this is only an example, and said UE determination can be performed at an earlier point of time instead, e.g. after configuration, before early DL synchronization or when evaluating the trigger conditions.

Fig. 15 illustrates both alternative UE behaviour, i.e. the gNB-controlled as well as the UE-autonomous early UL synchronization in separate dashed boxes. It is to be understood that the UE follows only one of the two alternative UE behaviour, as defined by the previous configuration at the UE.

In case the UE is configured to perform a gNB-controlled early UL synchronization, the UE should not start the early UL synchronization right after successfully completing the early DL synchronization. Rather, the UE transmits an early-uplink-synchronization request to its serving base station gNB1, requesting to perform early uplink synchronization. Correspondingly, the gNB1 is then responsible to decide on the UE-requested early UL synchronization and correspondingly determines whether to allow the UE to perform an early uplink synchronization with a mobility candidate cell or beam or not, here for beam 1 of cell 2. The gNB1 can take this decision e.g. by taking into account information on the neighbouring cells or beams, such as network congestion.

In case the gNB1 decides positively, the gNB 1 transmits an early uplink synchronization trigger to the UE for the mobility candidate cell and beams indicated in the early uplink synchronization request, here beam 1 of cell 2. In one exemplary option (see further details below), the early UL synchronization request can be implemented as an early-DL-sync status report, e.g. implicitly request the early UL synchronization in addition to the reported successful early DL synchronization status. After receiving the early uplink synchronization trigger from the serving base station, the UE can perform the early uplink synchronization with the indicated mobility candidate cell and beam, here beam 1 of cell 2.

In case the UE is configured to perform a UE-autonomous early UL synchronization, the UE may straight away proceed to perform the early uplink synchronization with the mobility candidate cell and beam, here beam 1 of cell 2, having the satisfied trigger condition. This avoids the delay and signaling involved by the gNB-controlled early UL synchronization.

After the early UL and DL synchronization, the UE may continue its services (e.g. exchange of data) with its serving gNB1.

A further subsequent cell-switch (see LTM cell switch execution and completion of Fig. 8, or conditional LTM cell switch) may or may not be triggered subsequently for the mobility candidate cell and beam, for which early synchronization was performed. If triggered, the UE may perform a RACH-less cell switch to said target cell and beam, because the UE is already fully synchronized in the downlink and uplink with the target cell and beam. This further expedites the switch to the new target cell.

It should be noted that in the above solution, the UE, when receiving the early UL sync trigger, does not perform another early DL synchronization, because it already was successfully performed by the UE before. The early-UL-sync trigger is primarily to trigger the early UL synchronization, not the early DL synchronization. This can be different from a similar procedure in the prior art, in which the UE is triggered for early synchronization, but for downlink and uplink (see Fig. 9).

On the other hand, such a procedure assumes that the early DL synchronization is still valid. If however, when receiving the early UL sync trigger, the UE considers that the early DL synchronization is no longer valid (e.g. because of a long time delay and/or fast-changing conditions), the UE may decide to repeat the early DL synchronization in addition to performing the early UL synchronization.

In the above, a basic and exemplary solution for an improved early synchronization procedure has been presented. Below, more detailed solutions for the improved early synchronization procedure will be presented.

### <Examples of the early UL configuration>

As explained above with respect to Fig. 11-15, the UE is configured on whether and how to perform the early UL synchronization, be it UE-autonomously or gNB-controlled. Exemplary implementations thereof will be explained in more detail below.

Generally, the early-UL-sync configuration indicates whether in response to successfully completing the early downlink synchronization a UE may to perform an early uplink synchronization autonomously or whether a UE is requested to first request an indication to perform an early uplink synchronization. Such a general configuration does not necessarily depend on the candidate cell or beam for which the early uplink synchronization is to be performed nor on the satisfied trigger condition that caused the early (DL and) UL synchronization.

In other examples, the early-UL-sync configuration may for instance define the UE behaviour for specific candidate cells or beams, thereby allowing to differentiate the UE behavior for different candidate cells or beams. As a result, according to the cell or beam-specific early-UL-sync configuration, the UE may be configured to perform a UE-autonomous early UL synchronization for one candidate cell or beam and may be configured to perform a gNB-controlled early UL synchronization for another candidate cell or beam. Correspondingly, the early-UL-sync configuration may include corresponding cell identifications (and optionally beam identifications) to differentiate the UE behaviour between different cells and beams. The early-UL-sync configuration may further include an early-UL-sync-behaviour indication, which indicates how the UE should perform the early UL synchronization. The early-UL-sync-behavior indication may in one example be a simple one-bit flag to differentiate between gNB-controlled and UE-autonomous early UL synchronization.

Additionally or instead of defining the UE behavior for specific candidate cells or beams, the early-UL-sync configuration may for instance define the UE behavior for specific trigger conditions, thereby allowing to differentiate the UE behavior for different trigger conditions. As a result, according to the trigger-condition-specific early-UL-sync configuration, the UE may be configured to perform a UE autonomous early UL synchronization in case of one satisfied trigger condition and may be configured to perform a gNB-controlled early UL synchronization for another satisfied trigger condition. Correspondingly, the early-UL-sync configuration may include corresponding IDs of trigger conditions (e.g. Event IDs) and the early-UL-sync-behavior indication as mentioned above already.

According to further exemplary implementations, the early-UL-sync configuration may include further information to configure other aspects related to the early UL synchronization. In one exemplary implementation, the early-UL-sync configuration includes information on radio resources (e.g. PRACH channel, PRACH occasion, RACH preamble etc.) to be used for performing the early uplink synchronization (e.g. the random access procedure).

The early-UL-sync configuration may include information on the preamble, dedicated to the UE, that is to be used by the UE for performing the random access procedure of the early UL synchronization. By configuring a UE-dedicated preamble, the random access procedure can be contention free, thus facilitating a successful early uplink synchronization. Otherwise, if no dedicated preamble is provided to the UE, a contention based random access procedure is performed for the early UL synchronization.

In one example, the indicated radio resources and preamble for the early UL synchronization (e.g. RACH) can be provided for each of the candidate cells and beams, or only for some of them. Correspondingly, the radio resources and preamble can be associated with a cell ID and beam ID, to allow the UE to determine which radio resources and preamble to use for performing an early UL synchronization with the corresponding cell or beam.

In one example, the serving gNB of the UE is responsible for generating the early-UL-sync configuration and then for transmitting same to the UE. Thus, the serving gNB of the UE determines whether the UE is allowed to perform a UE-autonomous early UL synchronization or is required to first request a corresponding early-UL-sync indication from its source gNB. This determination may be based for instance on network conditions of mobility candidate cells or beams available for mobility of the UE. The UE might be configured for an autonomous early UL synchronization for less congested cells (e.g. lower load on a cell), while for more congested cells the UE is configured to perform a gNB-controlled early UL synchronization.

The serving gNB obtains the necessary information from the neighbour cells. If network conditions change, the serving gNB may also update the early-UL-configuration accordingly.

According to one exemplary 5G-compatible implementation, the early-UL-configuration can be based on the EarlyUL-SyncConfig Information Element (IE) already defined by 3GPP. The

EarlyUL-SyncConfig IE can be part of the LTM candidate configuration. According to 3GPP TS 38.331 v18.2.0, the EarlyUL-SyncConfig IE is used to configure random access resources for the early UL synchronization procedure, including e.g. the IE "frequency Info UL" (which provides basic parameters of an uplink carrier and transmission thereon), e.g. a generic RACH configuration, which provides some generic RACH parameters for performing a random access procedure on a candidate cell (e.g. PRACH configuration index, transmit power, response window etc.), and e.g. the LTM PRACH subcarrier spacing of PRACH for LTM, etc.

The already-defined EarlyUL-SyncConfig can be reused and extended with further information, specific to the present improved early synchronization procedure. An improved EarlyUL-SyncConfig may e.g. include the early-UL-sync indication field (for instructing either UE-autonomous or gNB-control early UL synchronization). In one example, if this early-UL-Sync indication fields is present, the UE is allowed to perform early UL sync autonomously using the PRACH channel resources.

Furthermore, the EarlyUL-SyncConfig may e.g. include one or more of specific RACH resource parameters such as the PRACH preamble index (configuring a dedicated PRACH preamble for the UE to perform contention-free RACH) and the PRACH mask index (configuring e.g. one specific PRACH occasion, e.g. time and/or frequency radio resources, for the PRACH UL transmission).

A corresponding example of an improved EarlyUL-SyncConfig is presented below, with the new elements PRACH mask index, PRACH preamble index, early-UL-sync indication being highlighted in bold.

| **EarlyUL-SyncConfig** |
|---|
| Frequency info UL |
| RACH-configuration |
| Bandwidth Parameters |
| SSB-perRACH-ocassion |
| Prach-rootsequenceindex |
| Ltm-PRACH-SubcarrierSpacing |
| n-TimingAdvanceOffset |
| **PRACH mask index** |
| **PRACH preamble index** |
| **early-UL-Sync indication** |

According to other implementations of the improved early synchronization procedure, further parameters might be included in the EarlyUL-SyncConfig IE, such as the ID of trigger conditions (e.g. Event ID) to allow differentiating between different trigger conditions or the ID of candidate cells to allow differentiating between different candidate cells.

The Event ID (and possibly also the cell ID) might be useful when multiple LTMx events are configured at the UE and only a subset of the configured LTMx events are to be dedicated to an early synchronization procedure while the remaining LTMx events may be dedicated to a cell switch procedure.

As an alternative implementation, the early-UL-sync configuration of the improved early synchronization procedure can be configured as a separate IE in the LTM candidate configuration (in which the legacy EarlyUL-SyncConfig IE is included) along with an index to refer to the PRACH channel which is derived using the EarlyUL-SyncConfig IE.

Overall, according to any of the above implementations, the UE is configured appropriately to be able to determine whether and how to perform early UL synchronization.

### <Examples of the trigger condition configuration>

As explained above with respect to Fig. 11-15, the UE may evaluate trigger conditions for one or more mobility candidate cells or beams in the context of performing an early DL synchronization and possibly an early UL synchronization. Exemplary implementations thereof will be explained in more detail below.

According to one example implementation, the trigger conditions are defined in a suitable mobility configuration, which can be received from the serving gNB of the UE. In one example, the trigger conditions can be specifically defined for the purpose of performing early synchronization (DL / UL) with mobility candidate cells. Therefore, these early-sync-specific trigger conditions are different from other trigger conditions such as for handover, cell-switch or conditional cell-switch procedures.

The trigger conditions are used to perform early synchronization with mobility candidate cells and beams, so as to thereby facilitate expediting a potential subsequent change to said candidate cell and beam. Thus, the parameters of the trigger conditions are defined in a manner that is suitable to predict a potential subsequent change to said candidate cell. For instance, the trigger conditions for the early synchronization can be similar to other trigger conditions for an actual cell switch (e.g. trigger condition for reporting measurement results as part of the cell-switch procedure), but with less stringent thresholds.

According to other exemplary implementations, the trigger conditions are not dedicated to early synchronization but rather can be the trigger conditions also used for a handover or cell switch. The event conditions for cell switch thus do not only trigger the transmission of a measurement report to the serving gNB, thereby assisting the serving gNB to decide on the cell switch (see e.g. Fig. 8). In particular, the measurement report includes results of measurements performed by the UE on reference signals received from one or more mobility candidate cells or beams. The satisfied trigger conditions further are reused to trigger early synchronization at the UE. In one example, at least the early DL synchronization can be performed before executing the cell switch.

Consequently, in response to evaluating that the trigger condition for one mobility candidate cell or beam is fulfilled, a measurement report is transmitted by the UE to its serving gNB and the early DL / UL synchronization is triggered. The measurement report can be transmitted e.g. before or after performing the early downlink synchronization, and before or after performing the early uplink synchronization.

In the above, it was described that the same trigger conditions can be used for triggering the transmission of a measurement report and the early DL/UL synchronization of the improved early synchronization procedure. In specific exemplary implementations, the triggered measurement report can be part of Layer-3 measurement reporting or Layer-1 measurement reporting. Layer-3 measurement reporting can be exemplarily implemented in that the measurement results are generated at layer-1 but reported at RRC layer using RRC messages. Layer-3 measurement reports are typically used for Layer-3 handover procedures, where the network may use L3 measurement reporting during the LTM candidate preparation phase.

On the other hand, Layer-1 measurement reporting can be exemplarily implemented in that the measurement results are generated at layer-1 and transmitted directly over PHY layer messages. The network uses the L1 measurements during LTM to enable faster reporting from the UE and to use the lower layer of gNB (gNB-DU) to perform handover (cell switch) decision to enable faster handover by reducing interruptions during handover.

In still other exemplary implementations, the trigger conditions can be the trigger conditions also used for a conditional cell switch. The event conditions for conditional cell switch thus do not only trigger a cell switch in the UE but are reused to trigger an early synchronization at the UE. In this case, the early synchronization can be performed before the conditional cell switch is executed by the UE. For instance, the early DL and/or UL synchronization can be at least started during the time-to-trigger duration, e.g. before the trigger condition is actually considered to be fulfilled for the conditional cell switch (more details of such an expedited early DL/UL synchronization are provided below).

According to further exemplary implementations, the trigger conditions can be part of the event reporting configuration for only reporting L1 measurement results.

Some examples of trigger conditions, e.g. for reporting a measurement report and early synchronization, are as follows.
- Event A1: serving cell/beam becomes better than absolute threshold.
- Event A2: serving cell/beam becomes worse than absolute threshold.
- Event A3: neighbour cell/beam becomes amount of offset better than serving cell/beam.
- Event A4: neighbour cell/beam becomes better than absolute threshold.
- Event A5: serving cell/beam becomes worse than absolute threshold1 AND neighbour cell/beam becomes better than another absolute threshold2.
- Event D1: distance between UE and referenceLocation1 is above threshold1 and distance between UE and referenceLocation2 is below threshold2.

Some further examples of trigger conditions, e.g. for the conditional event configurations, are as follows.
- CondEvent A3: neighbour cell/beam becomes amount of offset better than serving cell/beam.
- CondEvent A4: neighbour cell/beam becomes better than absolute threshold.
- CondEvent A5: serving cell/beam becomes worse than absolute threshold1 AND neighbour cell/beam becomes better than another absolute threshold2.
- CondEvent D1: distance between UE and referenceLocation1 is above threshold1 and distance between UE and referenceLocation2 is below threshold2.
- CondEvent T1: time measured at UE becomes more than configured threshold t1-Threshold but is less than t1-Threshold + duration.

In any case, the UE evaluates the trigger conditions so as to determine mobility candidate cells and / or beams for which to perform early synchronization if the trigger conditions are satisfied. In one example, evaluating trigger conditions involves measuring reference signals received from said mobility candidate cells and beams. The reference signals for measurements can be e.g. the SSB signal or a CSI-RS signal. These reference signals can be e.g. configured in a corresponding measurement configuration (e.g. the LTM measurement configuration). If an SSB signal is configured as a reference signal for measurement, then the corresponding SSB /PBCH channel (or PBCH DL channel) can be directly identified by the UE using that measurement configuration.

If a CSI-RS is configured as the reference signal for measurement, then the corresponding SSB/PBCH channel (or PBCH DL channel) is derived from the QCLed (Quasi-Co-Located) source of the SSB available from the TCI (Transmission Configuration Indicator) state table configured for the LTM candidate beams.

Overall, the UE may be provided with various different configurations in the context of the present improved early synchronization procedure. In overview, the UE may be provided with the early synchronization configuration (e.g. including the early UL sync configuration as discussed above), so as to define parameters and the UE behaviour on how to perform early synchronization. Furthermore, the UE may be provided with a mobility configuration, such as an LTM configuration or a conditional LTM configuration for mobility; in one example, this (cond.) LTM configuration may for example include the early UL sync configuration discussed above. Furthermore, the UE may be provided with a measurement configuration to define the measurements that are to be performed by the UE, e.g. for evaluating trigger conditions. Still further, the UE may be provided with an event reporting configuration (or conditional event reporting configuration) to define the trigger conditions and to define how to report measurement results to the source of gNB. In one example, one or more of these configurations can be provided to the UE using the RRC protocol.

Overall, according to any of the above implementations, the UE is configured with trigger conditions that it can evaluate to determine whether to perform early synchronization and to which mobility candidate cell or beam.

### < Examples of performing early DL synchronization >

As explained above with respect to Fig. 11-15, the UE may perform an early DL synchronization clumsily. Exemplary implementations thereof will be explained in more detail below.

In the above improved early synchronization procedure, the early DL synchronization is performed by the UE in response to evaluating that a trigger condition is satisfied. The early DL synchronization is thus performed by the UE directly in response to the satisfied trigger condition, without awaiting a further instruction or indication from another entity, such as the source gNB.

In one example, the early downlink synchronization is performed so as to achieve time and/or frequency synchronization with the corresponding mobility candidate cell and beam. In a more detailed example, the UE detects the radio boundary (e.g. the exact timing when a radio frame starts) and the OFDM symbol boundary (e.g. the exact timing when an OFDM symbol starts), by detecting and analysing SS Block time domain allocation information. Hence, DL clock/time synchronization is achieved with the cell. Furthermore, the frequency offset of the UE is corrected respectively aligned using the SS Block frequency allocation information, so as to achieve frequency DL synchronization with the cell. Aligning clock and frequency offsets with the cell facilitates that the messages in the DL from that cell are received correctly.

In further examples, the early DL synchronization may also comprise that the UE acquires the relevant synchronization signals, e.g., Primary Synchronization Signal, PSS, and Secondary Synchronization Signal, SSS and optionally also the PBCH (with MIB and SIB1). The UE identifies these synchronization signals either based on configuration information provided in advance to the UE or alternatively by the UE searching for these synchronization signals when processing the signals received from the candidate cell.

In the above improved early synchronization procedure, the early DL synchronization is performed by the UE in response to evaluating that a trigger condition is satisfied. In some example implementations, the evaluation of trigger conditions also takes into account whether the trigger condition is satisfied for a minimum amount of time or a minimum number of times in order to actually consider the trigger condition to be satisfied or fulfilled. This extra duration can be called time-to-trigger duration. Such an implementation delays the final determination that a trigger condition is satisfied by the mentioned time-to-trigger duration, but facilitates avoiding that an isolated measurement may unjustly fulfill the trigger condition.

According to another exemplary implementation, the early DL synchronization can be performed by the UE during or after this time-to-trigger duration, during which the UE continues to evaluate whether the trigger condition is fulfilled for a minimum amount of time or a minimum number of times. In order to further expedite the early DL synchronization, the UE may already start (and possibly complete) performing the early DL synchronization during the time-to-trigger duration, e.g. even before finally determining that the trigger condition is actually satisfied. Therefore, the early DL synchronization is performed even earlier at the UE. This can be particularly useful in scenarios where there is typically only a small amount of time available before an actual handover/cells which is executed (e.g. for conditional cell switch).

According to one example implementation, the UE may transmit a downlink synchronization status report, indicating a successful completion of the early downlink synchronization, to its source gNB. Further below, the DL sync status is described as being used for requesting early UL synchronization from the serving gNB (see gNB-controlled early UL synchronization). While this may be one use case for transmitting the downlink synchronization status to the source gNB, there might be other reasons for informing the source gNB of the DL sync status. Therefore, the present improved early synchronization procedure, additionally involves the step of transmitting a downlink synchronization status report to the source gNB after successfully completing the early downlink synchronization, be it for requesting early UL synchronization or for any other purpose. In any case, the source gNB is thus up to date on the downlink synchronization status at the UE side for one or more potential candidate cells. Example details on how such a downlink synchronization status report can be implemented are provided below.

### < Examples of requesting early-UL-synchronization>

As explained above with respect to Fig. 11-15, the UE may be configured to first request an indication to perform an early UL synchronization, before being allowed to actually perform the early UL synchronization. Exemplary implementations thereof will be explained in more detail below.

To said end, the UE transmits an early-UL-Sync request message to its source gNB (see Fig. 15), identifying the candidate cell and beam for which the trigger condition is satisfied. According to one example, the early-UL-Sync request can be transmitted as part of or together with a measurement report, e.g. a L1 or L3 measurement report.

The early-UL-Sync request may also include a downlink synchronization status report, indicating a successful completion of the early downlink synchronization. The DL sync status can e.g. be indicated in or together with the measurement report to the source gNB. The downlink synchronization status report may include an indication on the synchronization status and also an identification of the mobility candidate cell and an identification of the mobility candidate beam for which the synchronization status report applies.

In one example, the DL sync status can be a flag to indicate the DL sync status (e.g. synchronized or not synchronized), e.g. bit value 1= success and bit value 0 = failure. Alternatively, the DL sync status need not be explicitly transmitted as an element of the DL synchronization status report; rather, the DL sync status can be implicit from the DL sync status report itself, because such a report is only sent to indicate the DL sync success. Thus, if the DL sync status report is not sent, then DL sync with a cell or beam is assumed to not have been achieved.

In the following, exemplary implementations of a DL synchronization status report are presented, respectively for being transmitting with an L1 or L3 measurement report and a separate measurement report.

| **MAC CE (or DCI) identity for L1 / L3 meas report** |
|---|
| Cell ID |
| Beam ID |
| RSRP/ SINR measurement |
| DL sync status |

### Example with L1 or L3 measurement report

Alternatively, the DL status report can also be transmitted as a separate message, with the following exemplary content.

| **MAC CE (or DCI) identity for DL status** |
|---|
| Cell ID |
| Beam ID |
| DL sync status |

### Example DL status (separate message)

In the above, it was explained that the DL synchronization status is transmitted from the UE to the serving gNB of the UE; in some implementations, the DL sync status is considered as the implicit early UL sync request. This is beneficial for the following reasons. Early UL synchronization may beneficially be performed by the UE only for those candidate cells and beams for which the early DL synchronization was successful. If DL synchronization fails, it may be the result of a weak candidate cell or beam. This avoids potential UL synchronization failures, e.g., in scenarios with bad time alignment or insufficient transmit power for transmitting in the uplink. Reducing UL synchronization failures thus also reduces the effort at the network side to monitor and re-trigger early UL sync again.

Therefore, in case the UE is configured to perform autonomous early UL synchronization, the early UL synchronization can be limited to only those candidate cells and beams for which the UE has successfully synchronized in the downlink. The UE does not start the autonomous early UL synchronization for candidate cells or beams with no successful DL synchronization status.

In case the UE is configured to first contact the serving gNB to obtain an indication regarding the early UL synchronization, the DL synchronization status can be taken into account by the serving gNB. Correspondingly, the serving gNB1 can trigger the early UL synchronization only to those candidate cells and beams for which the UE has successfully synchronized in the downlink (as indicated by the DL sync status), but not for others without a successful DL synchronization status.

In any case, the improved early synchronization procedure allows the UE to request its serving gNB for permission to perform the early UL synchronization.

### < Examples of performing early UL synchronization >

As explained above with respect to Fig. 11-15, the UE may perform an early UL synchronization. Exemplary implementations thereof will be explained in more detail below.

In one example, the early uplink synchronization is performed so as to obtain a timing advance value that will be applicable by the UE for UL communication timing with respect to the DL communication timing of a cell/beam. The UE may thus align with the exact timing for all the transmission channels, such as PUSCH and PUCCH. The timing advance value can be obtained and maintained for example at the UE side and then applied by the UE when the UE transmits signals to the candidate cell / beam. On the other hand, the timing advance value can be obtained (from the candidate cell) and maintained by the source gNB, and then provided to the UE in time (e.g. when sending handover / cell switch command to the UE) so that it is available for the UE to align UL communication timing with respect to the DL communication timing of a cell/beam.

There are several options on how to obtain the TA value. From UE perspective, the TA value can either be obtained and maintained at the UE side or at another entity of the network (such as the source gNB).

In one example, the transmission misalignment, if any, will be identified by the candidate cell/gNB using initial uplink communication transmitted by the UE, called the random access procedure (RACH). Here the transmitted preamble (first message of the RACH) will be used by the candidate gNB to estimate the timing advance (TA) value to be used by the UE when communication with said candidate gNB. The thus determined TA value can be transmitted to the UE using a subsequent DL message of the RACH procedure. Thus, the TA value is already available at the UE at an early point of time. This is further useful in scenarios where the UE performs a cell switch to said candidate cell / beam, shortly after the early UL synchronization or without a further downlink signaling from the UE (e.g. with conditional mobility, e.g. conditional handover and conditional LTM).

Or, the thus determined TA value is transmitted by the candidate cell to the source gNB of the UE, such that the source gNB maintains the TA value for the candidate cell. The source gNB can then transmit the TA value to the UE, e.g. together with the handover / cell switch command, instructing the UE to change to the candidate cell.

As mentioned above, a random access procedure is performed or at least initiated by the UE to obtain the TA value for a mobility candidate cell or beam, and thus to achieve early UL synchronization. In one example, the random access procedure can be a contention free random access procedure (e.g. the preamble is dedicated to the UE, configured by source gNB, see Fig. 4, 5) or a contention based random access procedure (e.g. the preamble is randomly selected by UE, see Fig. 4, 5). Moreover, the random access procedure can be a 2-step or 4-step random access procedure. Performing a 4-step RACH facilitates a better contention resolution, e.g. for a contention-based RACH. For further exemplary implementation details on contention-free, contention-based, 2-step and 4-step random access procedures, reference is made to the above description in connection with Fig. 4 and 5 which also apply for the improved early synchronization procedure.

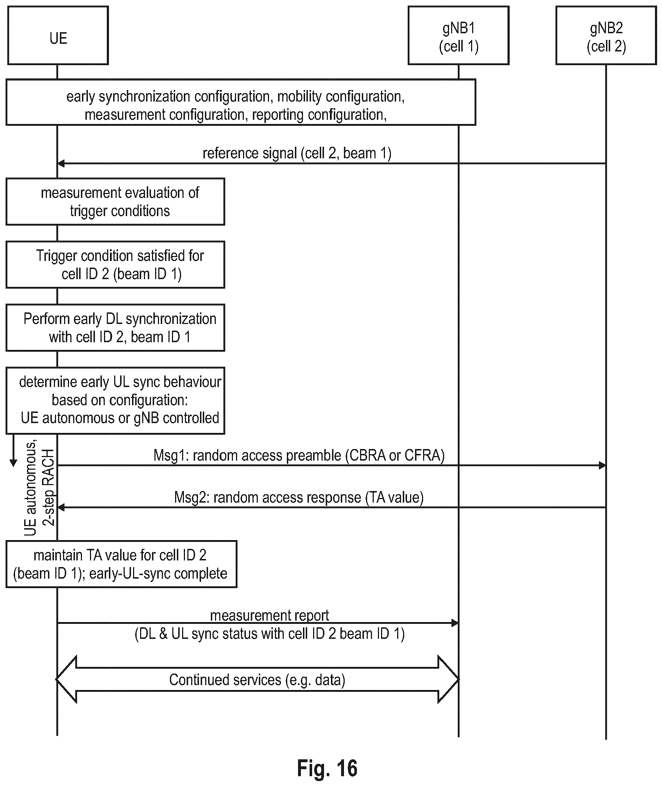

An exemplary first detailed implementation of the improved early synchronization procedure will be explained together **with** **Fig. 16****,** which is a signaling diagram, illustrating the exchange of messages between the different participating entities (here the UE, the source gNB and a candidate gNB) and the steps performed at these entities. In this exemplary implementation of Fig. 16, it is assumed that the UE is properly configured to participate in the improved early synchronization procedure, e.g. based on an early synchronization configuration, a mobility configuration, a measurement configuration and reporting configuration as explained above.

Fig. 16 also illustrates the reference signal transmitted from the neighbour cell, here beam 1 of cell 2, which can be measured by the UE. As already explained in connection with Fig. 15, the UE evaluates the trigger conditions and eventually determines that a trigger condition is satisfied for beam 1 of cell 2. In response to this satisfied trigger condition, the UE performs the autonomous early DL synchronization with said beam 1 of cell 2.

It is further assumed exemplarily that the UE is configured for also performing an autonomous early uplink synchronization with said beam 1 of cell 2. The UE performs a random access procedure for achieving early UL synchronization. In the present implementation, a 2 step random access procedure is assumed; similarly, a 4 step random access procedure could be performed instead.

The UE may determine the suitable parameters and resources for the random access procedure, such as the PRACH channel resource and PRACH preamble, e.g. from a configuration at the UE, e.g. the EarlyUL-SyncConfig. Alternatively, the PRACH channel resources could be obtained by the UE from the SSB / PBCH clock decoded during the early DL synchronization. The UE thus selects a preamble for the first message of the RACH, which can be either dedicated to the UE (thus resulting in a contention free RACH, CFRA) or can be selected randomly (thus resulting in a contention-based RACH, CBRA).

The candidate cell, here candidate gNB2, responds to the RACH Msg1 with a RACH Msg2 (random access response message, RAR), which may include the TA value for the UL synchronization. In a typical manner, the RAR may further include and thus echo the preamble, received in Msg1. The received timing advance value is maintained by the UE for candidate cell 2 and beam 1, to then be able to immediately achieve uplink synchronization when being triggered with a cell switch procedure to said beam 1 of candidate cell 2. From the UE perspective, the early uplink synchronization can thus be considered to be complete. The actual cell switch can be performed in a RACH-less manner by the UE, because the TA value has already been obtained before.

The example implementation of Fig. 16 further illustrates that a measurement report is transmitted from the UE to the source gNB1, where this measurement report was triggered by the same satisfied trigger condition which triggered the early downlink and uplink synchronization. The successful DL and UL synchronization status can be informed to the source gNB in or together with the measurement report. Details on the downlink and uplink synchronization status are provided in the above and below description.

In Fig. 16, the measurement report is transmitted after the early UL synchronization is complete. However, this is only an example, and alternatively, the measurement report could be sent prior to performing e.g. the early DL synchronization or the early UL synchronization. In said case, the DL and(or UL synchronization status report can be sent separately after successful early DL and UL synchronization using a separate new message (e.g. RRC message, or MAC CE message, or DCI message).

This completes the description of the detailed implementation of the improved early synchronization procedure according to Fig. 16. Further prior and subsequent operations such as the LTM preparation, LTM cell switch execution and LTM execution completion may be performed too, in this example.

As still another option for performing the early UL synchronization, rather than performing a random access procedure with the candidate cell, the UE calculates the timing advance value for a mobility candidate cell or beam. In one example, the TA value calculation is based on a TA value of a current cell or beam of the UE and the reception timing of downlink signals received from said mobility candidate cell or beam.

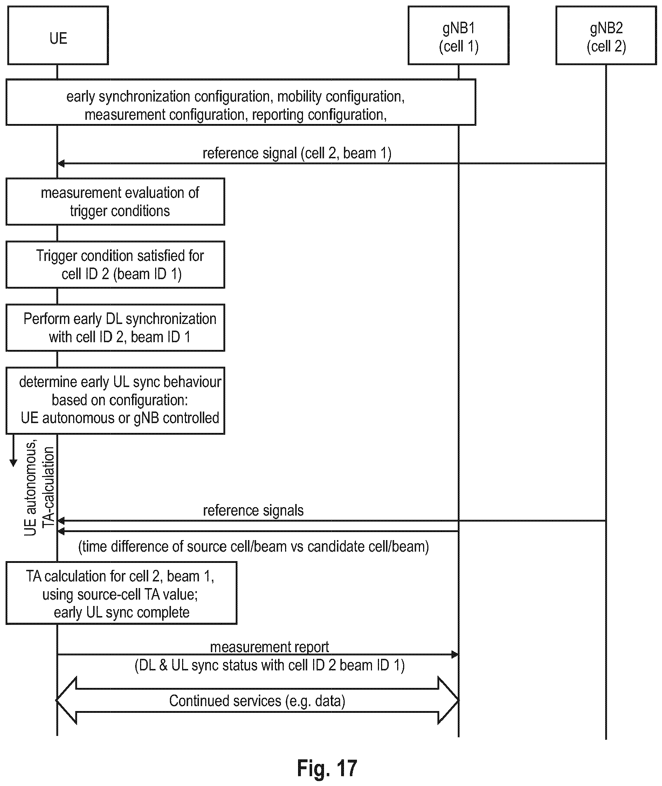

An exemplary detailed implementation of the improved early synchronization procedure will be explained together **with** **Fig. 17****,** which is a signaling diagram, illustrating the exchange of messages between the different participating entities (here the UE, the source gNB and a candidate gNB) and the steps performed at these entities. The implementation of Fig. 17 is in parts the same as the previously described detailed implementation explained above in connection with Fig. 16, however reflects the solution according to which the UE calculates the TA value rather than performing a random access procedure.

In one example, the UE may be additionally configured to perform this UE-based TA calculation, such that the UE determines to perform the early UL synchronization in said manner.

Thus, in a corresponding manner as explained above for Fig. 16, it is exemplarily assumed that the UE is configured to also perform an autonomous early uplink synchronization with said beam 1 of cell 2, and thus to calculate the TA value after successfully completing the early DL synchronization. For instance, the UE can proceed with calculating the TA for the candidate cell 2 and beam 1 using the time different measurements between reference signals of the source cell/beam and the candidate cell/beam (reference signals illustrated in Fig. 17). As a result, the UE thus obtains the TA value for the candidate cell and beam, here beam 1 of candidate cell 2, and thus successfully completes the early UL synchronization.

As already explained for Fig. 16, also in the solution of Fig. 17, a measurement report is transmitted from the UE to the source gNB1, here e.g. after completing the early UL synchronization and e.g. including the successful DL and UL synchronization status. Alternatively, the measurement report can be transmitted at a different point of time, in which case the early DL / UL synchronization status can be transmitted separately by the UE to the source gNB.

This completes the description of the detailed implementation of the improved early synchronization procedure according to Fig. 17.

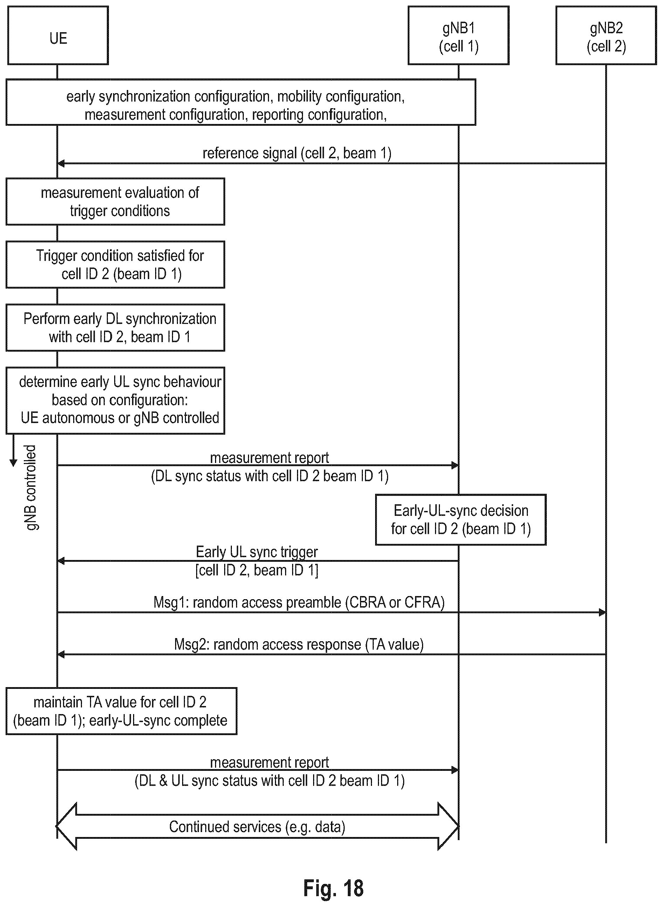

A further exemplary detailed implementation of the improved early synchronization procedure will be explained together **with** **Fig. 18****,** which is a signaling diagram, illustrating the exchange of messages between the different participating entities (here the UE, the source gNB and a candidate gNB) and the steps performed at these entities. The implementation of Fig. 18 is in parts the same as the detailed implementation explained above in connection with Fig. 16, however reflects the solution according to which the UE is configured to perform a gNB-controlled early UL synchronization.

Thus, in a corresponding manner as explained above for Fig. 16, it is exemplarily assumed that the UE is configured to autonomously perform an early DL synchronization with beam 1 of cell 2.

Then, the UE however determines that is should not perform a further autonomous early UL synchronization, but rather should first request a corresponding indication from its serving gNB1. In the present solution of Fig. 18, the measurement report, also triggered by the same trigger condition, is reported from the UE together with a DL sync status report to the serving gNB1. The measurement report and DL sync status are understood by the serving gNB as a request for early UL synchronization. The gNB1 thus takes a decision as to whether the UE is to be instructed to also perform early UL synchronization with beam 1 of cell 2. Assuming that the gNB1 decides in favour of such an early UL synchronization, a corresponding early UL sync trigger is transmitted from gNB1 to the UE.

In response to receiving such an early UL sync trigger from gNB1, the UE can now proceed to perform the early UL synchronization. In this example of Fig. 18, the early UL synchronization is achieved by performing a random access procedure, here a 2-step random access procedure (some variants of such a random access procedure were already described in connection with Fig. 16 above and equally apply in the present solution of Fig. 18). Accordingly, the RAR of the random access procedure may include the TA value for the UL synchronization. The received timing advance value is maintained by the UE for candidate cell 2 and beam 1, to then be able to immediately achieve uplink synchronization when being triggered with a cell switch procedure to said beam 1 of candidate cell 2. From the UE perspective, the early uplink synchronization can thus be considered to be complete.

As already explained for Fig. 16, also in the solution of Fig. 18, a measurement report is transmitted from the UE to the source gNB1, here e.g. after completing the early UL synchronization and e.g. including the successful DL and UL synchronization status. Alternatively, the measurement report can be transmitted at a different point of time, in which case the early DL / UL synchronization status can be transmitted separately by the UE to the source gNB.

This completes the description of the detailed implementation of the improved early synchronization procedure according to Fig. 18.

According to one exemplary implementation of the RACH procedure, only the first message of the RACH is transmitted by the UE, and the gNB1 does not respond with the usual second message. Instead of providing the TA value to the UE, the TA value is provided from the candidate cell to the source gNB, which maintains the TA value of the candidate cell/beam for the UE. The TA value at the source gNB can be forwarded to the UE at a later point in time, e.g. when a cell switch to the corresponding candidate cell and beam is imminent. In one example, the TA value can then be provided to the UE together with the cell switch command, thereby achieving that the UE has an early synchronization in both the downlink and the uplink.

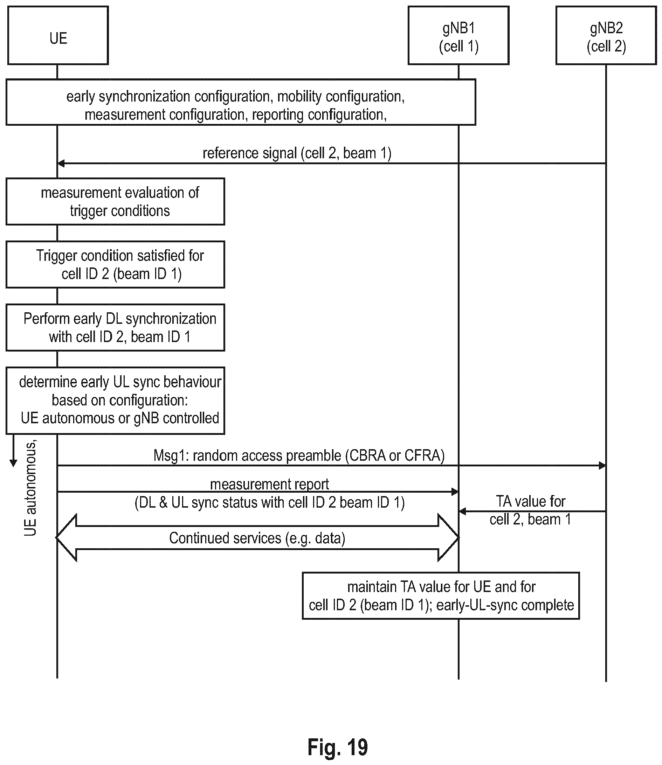

A further exemplary detailed implementation of the improved early synchronization procedure will be explained together with Fig. 19, which is a signaling diagram, illustrating the exchange of messages between the different participating entities (here the UE, the source gNB and a candidate gNB) and the steps performed at these entities. The implementation of Fig. 19 is in parts the same as the detailed implementation explained above in connection with Fig. 16, however reflects the solution according to which only the first message of the random access procedure is transmitted by the UE as part of the early UL synchronization.

As apparent from Fig. 19, the candidate cell receives Msg1 of the RACH, but does not respond with Msg2 (RAR) to the UE. Even in such an incomplete RACH procedure, the candidate cell can identify the UE correctly. For instance, a dedicated PRACH preamble could be reserved for the UE performing the present shortened RACH procedure for early UL synchronization. The candidate gNB1 can identify the UE using the received preamble.

After the UE transmits the Msg1 of the shortened RACH procedure, the UE can resume operation and data communication with the serving cell of gNB1.

From UE perspective, the early UL synchronization only involves one step, namely the transmission of Msg1 of the RACH. After said Msg1 transmission, the UE may consider the early UL synchronization to be completed and successful.

The TA value is sent from the candidate cell to the source cell to be maintained there. In one example, the TA is maintained until the TA value can be used for the cell switch operation. Although not illustrated in Fig. 19, the TA value can be transmitted to the UE along with the cell switch command, facilitating to trigger a RACH-less cell switch. Alternatively, rather than using the cell switch command for carrying the TA value, a new message can be defined to transmit the TA value from the source cell to the UE (e.g. using MAC CE or DCI), before the cell switch operation is triggered.

As already explained for Fig. 16, also in the solution of Fig. 19, a measurement report is transmitted from the UE to the source gNB1, here e.g. after completing the early UL synchronization and e.g. including the successful DL and UL synchronization status. Alternatively, the measurement report can be transmitted at a different point of time, in which case the early DL / UL synchronization status can be transmitted separately by the UE to the source gNB.

In an example variation, the source gNB upon receiving the DL/UL sync status may have to wait for a certain time duration before obtaining the TA value from the candidate cell, especially in scenarios with inter-CU candidate cells. The source gNB thus may have to wait before it is possible to trigger the UE for a cell switch, particularly a RACH-less cell switch, to benefit from the early UL synchronization.

This completes the description of the detailed implementation of the improved early synchronization procedure according to Fig. 19.

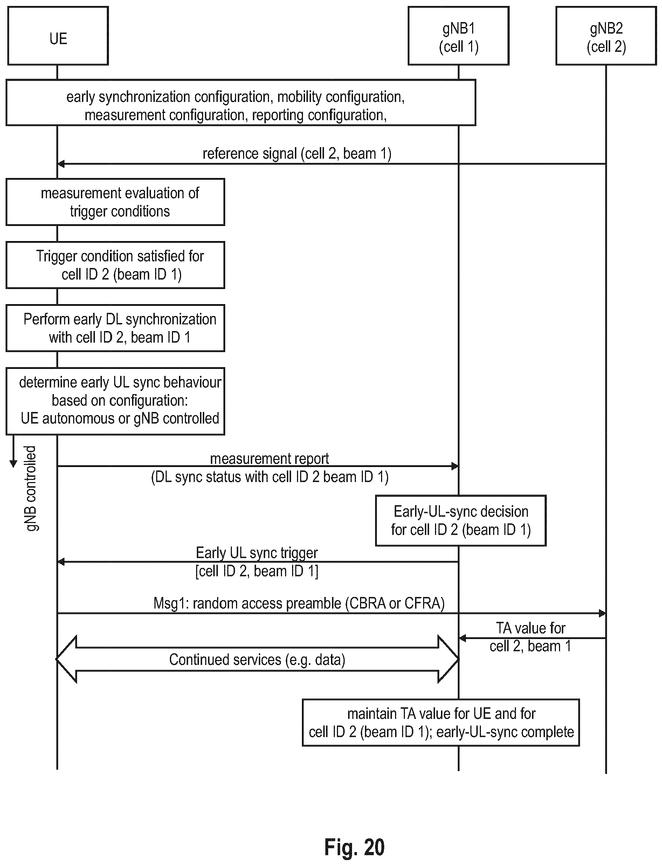

A further exemplary detailed implementation of the improved early synchronization procedure will be explained together **with** **Fig. 20****,** which is similar to the implementation of Fig. 19. However, the solution of Fig. 20, instead of being based on a UE-autonomous early UL synchronization, is based on a gNB-controlled early UL synchronization. Thus, the solution of Fig. 20 involves the transmission of the early UL sync trigger, here exemplarily as a measurement report and DL sync status. After the serving gNB1 of the UE decides in favour of the early UL synchronization and transmits the early UL sync trigger to the UE, the UE proceeds to perform the early UL synchronization. As described above already with Fig. 19, this involves transmitting only the first Msg1 of the shortened RACH to the candidate cell, and the transmission of the TA value for cell 2 and beam 1 to the serving gNB1. Further details on the steps of Fig. 20 are already explained in the context of Fig 19 and equally apply here for the exemplary solution of Fig. 20.

This completes the description of the detailed implementation of the improved early synchronization procedure according to Fig. 20.

As already mentioned in the context of the early DL synchronization, the evaluation of trigger conditions also takes into account whether the trigger condition is satisfied for a minimum amount of time or a minimum number of times in order to actually consider the trigger condition to be satisfied or fulfilled. This extra duration can be called time-to-trigger duration. According to another exemplary implementation, the early UL synchronization can be performed by the UE during or after this time-to-trigger duration, during which the UE continues to evaluate whether the trigger condition is fulfilled for a minimum amount of time or a minimum number of times. In order to further expedite the early UL synchronization, the UE may at least start performing the early UL synchronization during the time-to-trigger duration, e.g. even before finally determining that the trigger condition is actually satisfied. Therefore, the early UL synchronization is performed even earlier at the UE.

According to one example implementation, the UE may transmit an uplink synchronization status report, indicating a successful completion of the early uplink synchronization, to its source gNB. The UL sync status can be e.g. indicated in or together with a measurement report to the source gNB. The uplink synchronization status report may include an indication on the synchronization status and also an identification of the mobility candidate cell and an identification of the mobility candidate beam for which the synchronization status report applies.

In one example, the uplink sync status can be a flag to indicate the UL sync status (e.g. synchronized or not synchronized), e.g. bit value 1= success and bit value 0 = failure. Alternatively, the UL sync status need not be explicitly transmitted as an element of the UL synchronization status report; rather, the UL sync status can be implicit from the UL sync status report itself, because such a report is only sent to indicate the UL sync success. Thus, if the UL sync status report is not sent, then UL sync with a cell or beam is assumed to not have been achieved.

The UL sync status report can be transmitted as part of or together with a measurement report, e.g. a L1 or L3 measurement report.

In the following, exemplary implementations of an UL synchronization status report are presented, respectively for being transmitting with an L1 or L3 measurement report and a separate measurement report.

| **MAC CE (or DCI) identity for L1 / L3 meas report** |
|---|
| Cell ID |
| Beam ID |
| RSRP/ SINR measurement |
| UL sync status |

### Example with L1 or L3 measurement report

Alternatively, the UL status report can also be transmitted as a separate message, with the following exemplary content.

| **MAC CE (or DCI) identity for UL status** |
|---|
| Cell ID |
| Beam ID |
| UL sync status |

### Example UL status (separate message)

In other implementations, in which the UL and DL synchronization status are both transmitted to the source gNB (see above Fig. 16), the above example reports include both the DL sync status and the UL sync status.

### <Further Variations>

Different implementations and variants of the improved early synchronization procedure have been explained above. Further exemplary implementations thereof will be explained in more detail below.

In some of the above implementations, the early uplink synchronization can be performed by performing a random access procedure between the UE and the candidate cell. The random access procedure is performed using radio resources (e.g. PRACH channel and occasion) and possibly a RACH preamble, which have been previously configured for the UE. In such a solution, the radio resource and preamble might have to be reserved at the candidate cell and cannot be used otherwise. This results in an inefficient use of radio resources at the candidate cell. Further exemplary variants of the improved early synchronization procedure are intended to mitigate or avoid said problems.

In particular, the UE is also configured in advance with radio resources (e.g. PRACH channel and occasion, and e.g. RACH preamble) for a random access procedure to be performed by the UE with a mobility candidate cell for performing early uplink synchronization. The configured radio resources however are deactivated. These deactivated radio resources, although configured, should not be yet used by the UE. Thus, these deactivated radio resources need not be kept reserved at the candidate cells and can be used otherwise.

The exemplary implementation further includes a dynamic activation mechanism, which allows to dynamically activate said deactivated radio resources when needed, e.g. some time before or when actually performing the early UL synchronization based on the random access procedure. For instance, the early uplink synchronization trigger, transmitted from the source gNB to the UE (see Fig. 15), may further comprise an activation command for activating the previously-configured deactivated radio resources. The UE, when receiving the activation command, will perform the random access procedure using the thus activated radio resources.

From the network side perspective, the source gNB may decide to activate the previously-configured-but-deactivated radio resources for the random access procedure and to transmit the activation command to the UE. Furthermore, the source gNB should inform or request the candidate cell about the activation of the previously-configured-but-deactivated radio resources. Correspondingly, after receiving the early UL sync request from the UE, identifying the candidate cell and beam, the source gNB may transmit an activation request (e.g. called CFRA resource activation request; exemplarily assuming CFRA is to be used) to the candidate gNB of the candidate cell as identified in the early-UL-sync request. Assuming that the candidate cell approves activating and thus reserving the radio resources for the early UL synchronization by a UE, the candidate gNB responds with an activation confirm message (e.g. called CFRA resource activation confirm) to the source gNB. The source gNB can then transmit the activation command to the UE.

In an alternative implementation, rather than activating the previous-configured radio resources, the improved solution could instead or additionally configure different radio resources to be used for the early UL synchronization, e.g. a different RACH preamble and/or a different PRACH occasion or channel than initially configured. The candidate cell can respond to the activation request with corresponding information to the source gNB in the activation confirm message, and the source gNB can further forward said information to the UE, e.g. in the early-UL-sync trigger message. In said case, the UE, when receiving the command, will perform the random access procedure using the newly-configured radio resources. Optionally, some of the previously-configured resources (e.g. PRACH occasion) can be activated, while others (e.g. PRACH preamble) will be newly configured, such that a mix of previously-configured and newly-configured RACH resources will be used by the UE to perform a random access procedure with the candidate cell to achieve early UL synchronization.

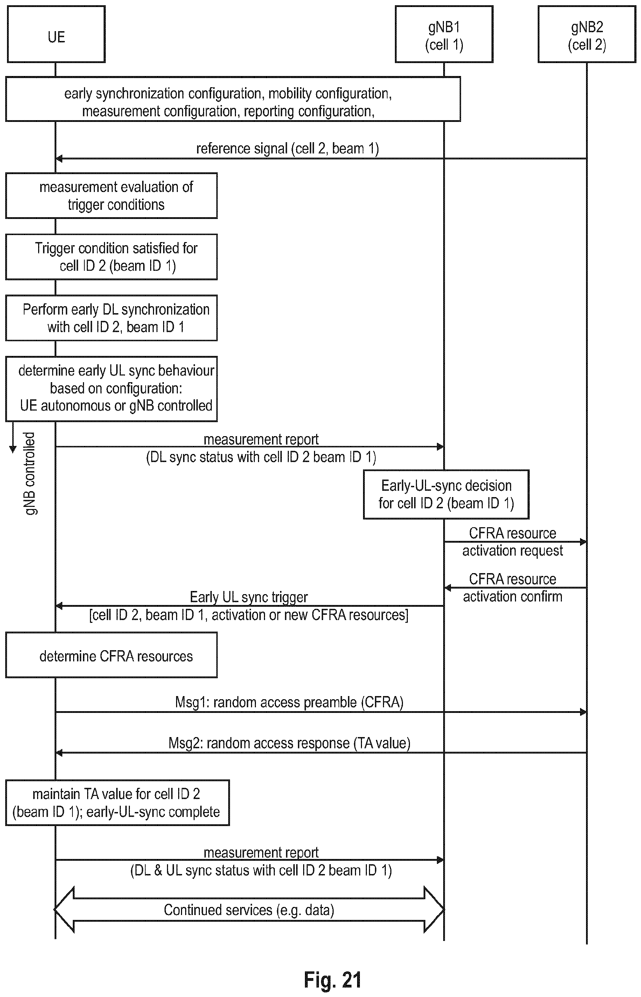

A further exemplary detailed implementation of the improved early synchronization procedure will be explained together with Fig. 21, which is a signaling diagram, illustrating the exchange of messages between the different participating entities (here the UE, the source gNB and a candidate gNB) and the steps performed at these entities. The implementation of Fig. 21 is in parts the same as the detailed implementation explained above in connection with Fig. 18, however additionally illustrates the above variant as to how CFRA resources previously configured but deactivated at the UE can be dynamically activated at the UE and how new CFRA resources can be defined and provided to the UE.

In more detail, as described above, the early UL synchronization as explained in connection with

Fig. 18 before is extended by a mechanism to request a dynamic activation of previously-configured but deactivated RACH resources at the UE. Fig. 21 thus illustrates the additional exchange of the CFRA resource activation request and CFRA resource activation confirm messages between the candidate cell and the source cell of the UE. Correspondingly, the early UL sync trigger is extended by an activation command, in case the candidate cell simply confirms the activation of all the previous-configured RACH resources. On the other hand, in case the candidate cell decides to overwrite some or all of the previously-configured RACH resources, the early UL sync trigger can be extended to carry such information to the UE as well. In any case, the UE is configured with resources to perform the RACH procedure with the candidate cell and beam. This completes the description of the detailed implementation of the improved early synchronization procedure according to Fig. 21.

In some of the above implementations, it was described that a DL synchronization status and an UL synchronization status are reported from the UE to the source gNB, e.g. in order to inform the source gNB accordingly. In some of these implementations, the DL synchronization status report, indicating a successful early DL synchronization, was used as an (implicit) request for an early UL synchronization. According to exemplary variants of the improved early synchronization procedure, one or both of the DL and UL synchronization status are not transmitted from the UE to the source gNB, but rather from the corresponding candidate cell, be it in the case that the UE performs UE-autonomous or gNB-controlled early UL synchronization.

For instance, the UE may be configured to perform both early uplink and downlink synchronization autonomously, e.g. without involving the source gNB. In one solution, after having successfully completed early uplink and downlink synchronization, the UE could transmit the DL and UL sync status report to the source gNB (e.g. In order together with a measurement report).

However, the candidate cell is involved in the early UL synchronization by the UE and can inform the source gNB about the successful DL and UL synchronization status. In particular, the candidate cell, when receiving the random access preamble from the UE, can assume that downlink synchronization was successfully completed by the UE, because the UE would start the (autonomous) early uplink synchronization only after achieving successful early downlink synchronization with the candidate cell. Furthermore, the candidate cell, when transmitting the timing advance value back to the UE or to the source gNB (e.g. in the second message of the random access procedure), will consider the early uplink synchronization to have been successfully completed. The candidate cell is thus aware of both the downlink and uplink synchronization status of the UE and correspondingly may transmit a report with the downlink and uplink synchronization status to the source gNB of the UE.

For some of the solutions where the candidate cell informs the source gNB about the UE's downlink and uplink synchronization status, such a report may also include the UE identity (which was acquired by the candidate cell during the RACH procedure) so as to allow the source gNB to associate the downlink and uplink synchronization status with the correct UE.

In some of the above solutions, the random access procedure is not fully performed between the UE and the candidate cell such that the timing advance value is not transmitted to the UE (e.g. in the second message of the random access procedure) but to the source gNB for maintaining same there for later forwarding to the UE in case of a cell switch (see e.g. Fig. 19, 20). In such solutions, the UE's downlink and uplink synchronization status can be transmitted to the source gNB together with the timing advance value. Then sending of the TA value from the candidate cell implicitly means UL sync status at the UE (UL sync has been achieved).

Depending on the scenarios, sending the DL and UL synchronization status from the UE to the source gNB might reduce latency in handover decisions at the source gNB. Reporting by the candidate cell can incur more time, which the source gNB needs to wait.

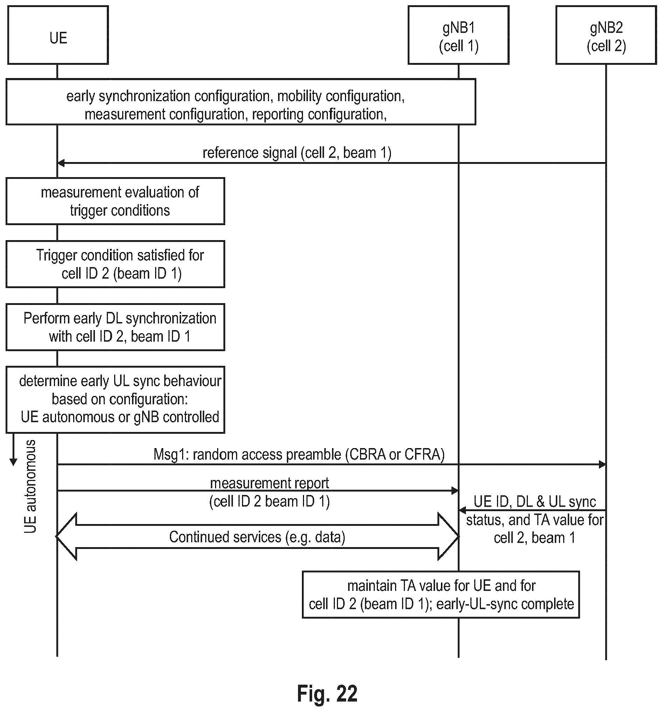

A further exemplary detailed implementation of the improved early synchronization procedure will be explained together with **Fig. 22****,** which is a signaling diagram, illustrating the exchange of messages between the different participating entities (here the UE, the source gNB and a candidate gNB) and the steps performed at these entities. The implementation of Fig. 22 is in parts the same as the detailed implementation explained above in connection with Fig. 19, however illustrates how the UL and DL sync status is transmitted from the candidate cell to the source cell (rather than from the UE, as in Fig. 19). Correspondingly, the measurement report message transmitted by the UE to the source gNB does not include the DL / UL sync status. Instead, the candidate cell transmits the DL and UL sync status directly to the serving gNB1 of the UE, in this example together with the TA value. This completes the description of the detailed implementation of the improved early synchronization procedure according to Fig. 22.

In the above implementations of the improved early synchronization procedure, it was described how the UE performs early DL and UL synchronization and how the source gNB is informed about the successful DL and UL synchronization status (e.g. with the measurement report from the UE, or from the candidate cell). In further exemplary variants, the source gNB may prioritize cell switch operation (e.g. RACH-less cell switch) to those candidate cells and beams for which the early DL / UL synchronization has been reported as successful. This might assist in providing an improved cell switch and overall performance, because early DL / UL synchronization is performed earlier and more reliably, especially in scenarios with dynamic radio conditions.

In a similar manner, when considering conditional cell switch, the UE is responsible for determining whether and to which candidate cell to switch. In one example, the UE could prioritize the conditional switch to those candidate cells and beams for which the early DL / UL synchronization was successful. This also allows to perform a RACH-less conditional cell switch, which is faster due to the omitted RACH procedure.

In the above implementations of the improved early synchronization procedure, it was described how the UE is configured with parameters and resources for performing the early DL and UL synchronization. Acquiring such parameters and resources for intra-CU candidate cells may not be too burdensome, because the same gNB-CU controls the current source cell and the candidate cells and thus is directly aware of the parameters and resources. However, there are scenarios that support inter-CU candidate cells, i.e. where the candidate cells belong to a different gNB-CU then the gNB-CU of the current source cell of the UE (see Fig. 3). In such scenarios, the source gNB may be required to obtain the parameters and resources from another gNB-CU, which requires a lot of inter-gNB interaction, such as extracting and collecting information on PRACH resources, preambles, the SSB, the PBCH etc. so as to properly prepare the early UL sync configuration, the mobility configuration etc., which will be sent from the source gNB to the UE. Some exemplary variants facilitate reducing the necessary inter-gNB exchange. For instance, when configuring the UE to use a contention-based RA procedure to achieve the early UL synchronization, there is no necessity to configure the PRACH preamble and PRACH occasions specifically for the UE and candidate cell. Furthermore, SSB and PBCH or PRACH channel information need not be specifically configured at the UE. Instead, the UE can search the SSB / PBCH channel from the SSB index identified from the reference signals received from the candidate cells (e.g. as configured for the measurement evaluation, or which are QCLed with the CSI-RS reference signals) to perform early DL synchronization. Further instead, the PRACH channel occasions for the early UL synchronization can be determined from the system information (MIB and SIB1) extracted from the SSB / PBCH Block.

In the above implementations of the improved early synchronization procedure, it was described that early DL and UL synchronization is performed for those candidate cells and beams for which the trigger conditions are evaluated to be satisfied. In further variants, however, the early DL and UL synchronization can be performed for a subset (i.e. less than all) of those candidate cells and beams with satisfied trigger conditions. For instance, the UE could determine one or more best candidate cells and beams for performing the early DL and UL synchronization.

Alternatively, the UE could perform early DL synchronization for all triggered candidate cells and beams. Then, however, for performing the early UL synchronization, the UE could determine one or more of best candidate cells and beams for which early DL synchronization was successful.

In any case, the processing and effort for performing early DL / UL synchronization can thus be limited. At the same time, such a limited early DL / UL synchronization should not or only slightly affect the benefit of early synchronization, because early synchronization is still performed for the best candidate cells and beams, which are those for which a potential cell switch is more likely.

Furthermore, the skipped early DL and/or UL synchronization for a candidate cell and beam can still be performed at a later point of time, e.g. in case the channel conditions for said candidate cell and beam improve.

### Further Variants, including Hardware and Software Implementation of the present disclosure

In the following, variants of the present disclosure will be described.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), Vehicle to Everything (V2X) communication, and communication between an Ambient loT Reader and an Ambient loT Device. The channels in the present disclosure may be replaced with PSCCH, PSSCH, Physical Sidelink Feedback Channel (PSFCH), PSBCH, PRDCH (Physical Reader-to-Device Channel), PORCH (Physical Device-to-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### (Ambient loT)

The terminal and the base station in one exemplary embodiment of the preset disclosure may be replaced with any of an Ambient loT Device or an Ambient loT Reader.

The Ambient loT Device may be a wireless communication device having a backscattering function or having a transmission/reception bandwidth of several resource blocks or less. Further, the Ambient loT Reader may be a wireless communication device having a communication function with an Ambient loT Device. The Ambient loT Device may also be referred to as an Ambient loT terminal, an loT terminal, an LPWA terminal, or a Tag.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to a first aspect, a UE is provided that includes the following. Processing circuitry of the UE evaluates one or more trigger conditions for one or more mobility candidate cells or beams. In response to evaluating that a trigger condition for a mobility candidate cell or beam is fulfilled, the processing circuitry performs an early downlink synchronization with said mobility candidate cell or beam. The processing circuitry also determines whether to perform an early uplink synchronization or request an indication to perform an early uplink synchronization based on configuration information from a serving base station of the UE. In response to successfully completing the early downlink synchronization with said mobility candidate cells or beams and based on the determination, the processing circuitry performs the early uplink synchronization or requests the indication from the serving base station.

According to a second aspect provided in addition to the first aspect, a transmitter transmits an early uplink synchronization request to the serving base station, requesting to perform early uplink synchronization, in case of determining that an indication is to be requested to perform the early uplink synchronization. A receiver receives an early uplink synchronization trigger from the serving base station, indicating early uplink synchronization to be performed. In response to receiving the early uplink synchronization trigger, the UE performs the early uplink synchronization with one or more of said mobility candidate cells or beams. In an optional implementation, the processing circuitry, in response to receiving the early uplink synchronization trigger, does not perform another early downlink synchronization. In an optional implementation, the early uplink synchronization request includes a downlink synchronization status report, indicating a successful completion of the early downlink synchronization. In an optional implementation, the downlink synchronization status report is transmitted in a measurement report. In an optional implementation, the downlink synchronization status report includes an indication on the synchronization status and optionally an identification of the mobility candidate cell and an identification of the mobility candidate beam for which the synchronization status report applies.

According to a third aspect provided in addition to the second aspect, the UE is configured with radio resources for a random access procedure to be performed by the UE with a mobility candidate cell for performing early uplink synchronization, the radio resources being deactivated. In an optional implementation, the early uplink synchronization trigger further comprises an activation command for activating the previously-configured radio resources, or wherein the early uplink synchronization trigger indicates radio resources, different from the deactivated radio resources, to be used for performing a random access procedure. The processing circuitry performs the random access procedure using the activated radio resources or the radio resources indicated in the early uplink synchronization trigger. In an optional implementation, the radio resources indicate a preamble to be transmitted by the UE in a first message of a random access procedure as part of an early uplink synchronization.

According to a fourth aspect, provided in addition to any one of the first to third aspects, in case of determining to perform the early uplink synchronization, the processing circuitry performs the early uplink synchronization with said mobility candidate cells or beams.

According to a fifth aspect, provided in addition to any one of the first to fourth aspects, after performing successfully the early uplink synchronization, a transmitter transmits an uplink synchronization status report to the serving base station of the UE. In an optional implementation, the uplink synchronization status report is transmitted in a measurement report. In an optional implementation, the uplink synchronization status report includes an indication on the synchronization status and optionally an identification of the mobility candidate cell and an identification of the mobility candidate beam for which the synchronization status applies.

According to a sixth aspect, provided in addition to any one of the first to fifth aspects, the early uplink synchronization is performed by transmitting a first message of a random access procedure from the UE to said mobility candidate cell. In an optional implementation, the random access procedure is a contention free random access procedure or a contention based random access procedure. Alternatively, the early uplink synchronization is performed by obtaining a timing advance value usable for uplink communication by the UE for the one or more of said mobility candidate cells or beams, optionally wherein said timing advance value is obtained by one of:
- performing a random access procedure between the UE and a mobility candidate base station and receiving the timing advance value in a message of the random access procedure from said mobility candidate base station, optionally wherein the random access procedure is a contention free random access procedure or a contention based random access procedure, and
- calculating the timing advance value for the mobility candidate cells or beams, optionally wherein the calculation is based on a timing advance value of a current cell or beam of the UE and reception timing of downlink signals received from said mobility candidate cell or beam.

According to a seventh aspect, provided in addition to any one of the first to sixth aspects, the configuration information indicates for one or a plurality of mobility candidate cells whether a UE is indicated to perform an early uplink synchronization directly in response to successfully completing the early downlink synchronization or whether a UE is requested to first request indication to perform an early uplink synchronization. In an optional implementation, for the one or a plurality of mobility candidate cells the configuration information includes an identification of said mobility candidate cell and an early uplink synchronization indication. In an optional implementation, the configuration information is specific to one or more of the trigger conditions, wherein the indication as to whether to perform an early uplink synchronization directly in response to successfully completing the early downlink synchronization or whether a UE is requested to first request indication to perform an early uplink synchronization depends on the trigger condition that was evaluated to be fulfilled. In a further optional implementation, the configuration information further includes one or more of:
- information on radio resources to be used for performing the early uplink synchronization,
- information on a UE-dedicated preamble to be used for performing a random access procedure of the early uplink synchronization.

According to an eighth aspect, provided in addition to any one of the first to seventh aspects, in response to evaluating that the trigger condition for one mobility candidate cell or beam is fulfilled, a transmitter further transmits a measurement report to its serving base station. In an optional implementation, transmitting the measurement report is performed according to one or more of:
- before or after performing the early downlink synchronization, and
- before or after performing an early uplink synchronization.

In a further optional implementation, the measurement report includes results of measurements performed by the UE on reference signals received from one or more mobility candidate cells or beams.

According to a ninth aspect, provided in addition to any one of the first to eighth aspects, a receiver of the UE receives from a service base station of the UE a mobility configuration, defining the one or more trigger conditions. The one or more trigger conditions are defined for:
- performing early synchronization with mobility candidate cells or beams, or
- participating in a cell switch, optionally wherein at least the early downlink synchronization is performed before executing the cell switch, or
- executing a conditional cell-switch, optionally wherein at least the early downlink synchronization is performed before executing the conditional cell switch.

According to a tenth aspect, provided in addition to any one of the first to ninth aspects, early downlink synchronization is performed during or after a time-to-trigger duration, during which the UE continues to evaluate whether the trigger condition is fulfilled for a minimum amount of time or a minimum number of times. Alternatively, performing the downlink synchronization with a mobility candidate cell or beam involves at least one of performing a time synchronization and a frequency synchronization with the mobility candidate cell or beam.

According to an eleventh aspect, provided in addition to any one of the first to tenth aspects, performing the downlink synchronization is done autonomously by the UE, without receiving from the serving base station of the UE an early downlink synchronization trigger, or wherein after performing the early downlink synchronization and the early uplink synchronization, the UE continues exchanging data with the source cell.

According to a twelfth aspect, a base station is provided comprising the following. Processing circuitry of the base station determines whether to configure a user equipment to allow the UE to perform an early uplink synchronization in response to successfully completing an early downlink synchronization with mobility candidate cells or beams or to configure the UE to request an indication to perform an early uplink synchronization from the base station. The processing circuitry generates configuration information according to the determination. A transceiver of the base station transmits the generated configuration information to the UE.

According to a thirteenth aspect, provided in addition to the twelfth aspect, the determining how to configure the UE is based on network conditions of mobility candidate cells or beams available for mobility of the UE.

According to a fourteenth aspect, provided in addition to the twelfth or thirteenth aspect, the transceiver receives from the UE a request to perform an early uplink synchronization for one or more mobility candidate cells or beams. The processing circuitry determines whether to instruct the UE to perform an early uplink synchronization with a mobility candidate cell or beam. The transceiver transmits an early uplink synchronization trigger to the UE for one or more of the mobility candidate cells or beams indicated in the early uplink synchronization request.

According to a fifteenth aspect, provided in addition to any one of the twelfth to fourteenth aspects, the transceiver, in response to receiving from the UE a request to perform an early UL synchronization, transmits a request to a mobility candidate cell to activate radio resources for a random access procedure to be performed by the UE with the mobility candidate cell for performing early uplink synchronization. The transceiver receives, from the mobility candidate cell, a request response confirming the activation of the radio resources. The transceiver transmits, to the UE, an early uplink synchronization trigger to indicate that early uplink synchronization is to be performed. The early uplink synchronization trigger further comprises an activation command for activating the radio resources for performing the random access procedure previously configured at the UE. In an optional implementation, the early uplink synchronization trigger radio resources comprises a preamble to be transmitted by the UE in the first message of the random access procedure.

According to a sixteenth aspect, a method is provided comprising the following steps performed by a user equipment:
evaluating one or more trigger conditions for one or more mobility candidate cells or beams,
in response to evaluating that a trigger condition for a mobility candidate cell or beam is fulfilled, performing an early downlink synchronization with said mobility candidate cell or beam, and
determining whether to perform an early uplink synchronization or request an indication to perform an early uplink synchronization based on configuration information from a serving base station of the UE,
in response to successfully completing the early downlink synchronization with said mobility candidate cells or beams and based on the determination, performing the early uplink synchronization or requests the indication from the serving base station.

According to a seventeenth aspect, a method is provided comprising the following steps performed by a base station:
determining whether to configure a user equipment to allow the UE to perform an early uplink synchronization in response to successfully completing an early downlink synchronization with mobility candidate cells or beams or to configure the UE to request an indication to perform an early uplink synchronization from the base station,
generating configuration information according to the determination, and
transmitting the generated configuration information to the UE.

According to an eighteenth aspect, and integrated circuit is provided, which, in operation, controls a process of a user equipment, UE, the process comprising the following steps performed by the UE:
evaluating one or more trigger conditions for one or more mobility candidate cells or beams,
in response to evaluating that a trigger condition for a mobility candidate cell or beam is fulfilled, performing an early downlink synchronization with said mobility candidate cell or beam, and
determining whether to perform an early uplink synchronization or request an indication to perform an early uplink synchronization based on configuration information from a serving base station of the UE,
in response to successfully completing the early downlink synchronization with said mobility candidate cells or beams and based on the determination, performing the early uplink synchronization or requests the indication from the serving base station.

According to a nineteenth aspect, and integrated circuit is provided, which, in operation, controls a process of a base station, the process comprising the following steps performed by the base station:
determining whether to configure a user equipment to allow the UE to perform an early uplink synchronization in response to successfully completing an early downlink synchronization with mobility candidate cells or beams or to configure the UE to request an indication to perform an early uplink synchronization from the base station,
generating configuration information according to the determination, and
transmitting the generated configuration information to the UE.

## Claims

1. A user equipment, UE, comprising:
processing circuitry, which in operation, evaluates one or more trigger conditions for one or more mobility candidate cells or beams,
in response to evaluating that a trigger condition for a mobility candidate cell or beam is fulfilled, the processing circuitry, in operation, performs an early downlink synchronization with said mobility candidate cell or beam, and
the processing circuitry, in operation, determines whether to perform an early uplink synchronization or request an indication to perform an early uplink synchronization based on configuration information from a serving base station of the UE,
in response to successfully completing the early downlink synchronization with said mobility candidate cells or beams and based on the determination, the processing circuitry performs the early uplink synchronization or requests the indication from the serving base station.

2. The UE according to claim 1, further comprising
a transmitter, which in operation, transmits an early uplink synchronization request to the serving base station, requesting to perform early uplink synchronization, in case of determining that an indication is to be requested to perform the early uplink synchronization,
a receiver, which in operation, receives an early uplink synchronization trigger from the serving base station, indicating early uplink synchronization to be performed,
in response to receiving the early uplink synchronization trigger, the processing circuitry, in operation, performs the early uplink synchronization with one or more of said mobility candidate cells or beams,
optionally wherein the processing circuitry, in response to receiving the early uplink synchronization trigger, does not perform another early downlink synchronization,
optionally wherein the early uplink synchronization request includes a downlink synchronization status report, indicating a successful completion of the early downlink synchronization,
optionally wherein the downlink synchronization status report is transmitted in a measurement report,
optionally wherein the downlink synchronization status report includes an indication on the synchronization status and optionally an identification of the mobility candidate cell and an identification of the mobility candidate beam for which the synchronization status report applies.

3. The UE according to claim 2, wherein the UE is configured with radio resources for a random access procedure to be performed by the UE with a mobility candidate cell for performing early uplink synchronization, the radio resources being deactivated,
optionally wherein the early uplink synchronization trigger further comprises an activation command for activating the previously-configured radio resources, or wherein the early uplink synchronization trigger indicates radio resources, different from the deactivated radio resources, to be used for performing a random access procedure, wherein the processing circuitry, in operation, performs the random access procedure using the activated radio resources or the radio resources indicated in the early uplink synchronization trigger, and
optionally wherein the radio resources indicate a preamble to be transmitted by the UE in a first message of a random access procedure as part of an early uplink synchronization.

4. The UE according to any one of claims 1 to 3, wherein in case of determining to perform the early uplink synchronization, the processing circuitry, in operation, performs the early uplink synchronization with said mobility candidate cells or beams.

5. The UE according to any one of claims 1 to 4, wherein after performing successfully the early uplink synchronization, a transmitter, in operation, transmits an uplink synchronization status report to the serving base station of the UE, optionally wherein the uplink synchronization status report is transmitted in a measurement report, optionally wherein the uplink synchronization status report includes an indication on the synchronization status and optionally an identification of the mobility candidate cell and an identification of the mobility candidate beam for which the synchronization status applies.

6. The UE according to any one of claims 1 to 5, wherein the early uplink synchronization is performed by transmitting a first message of a random access procedure from the UE to said mobility candidate cell, optionally wherein the random access procedure is a contention free random access procedure or a contention based random access procedure, or wherein the early uplink synchronization is performed by obtaining a timing advance value usable for uplink communication by the UE for the one or more of said mobility candidate cells or beams, optionally wherein said timing advance value is obtained by one of:
∘ performing a random access procedure between the UE and a mobility candidate base station and receiving the timing advance value in a message of the random access procedure from said mobility candidate base station, optionally wherein the random access procedure is a contention free random access procedure or a contention based random access procedure, and
∘ calculating the timing advance value for the mobility candidate cells or beams, optionally wherein the calculation is based on a timing advance value of a current cell or beam of the UE and reception timing of downlink signals received from said mobility candidate cell or beam.

7. The UE according to any one of claims 1 to 6, wherein the configuration information indicates for one or a plurality of mobility candidate cells whether a UE is indicated to perform an early uplink synchronization directly in response to successfully completing the early downlink synchronization or whether a UE is requested to first request indication to perform an early uplink synchronization,
optionally wherein for the one or a plurality of mobility candidate cells the configuration information includes an identification of said mobility candidate cell and an early uplink synchronization indication,
optionally wherein the configuration information is specific to one or more of the trigger conditions, wherein the indication as to whether to perform an early uplink synchronization directly in response to successfully completing the early downlink synchronization or whether a UE is requested to first request indication to perform an early uplink synchronization depends on the trigger condition that was evaluated to be fulfilled,
optionally wherein the configuration information further includes one or more of:
∘ information on radio resources to be used for performing the early uplink synchronization,
∘ information on a UE-dedicated preamble to be used for performing a random access procedure of the early uplink synchronization.

8. The UE according to any one of claims 1 to 7, wherein in response to evaluating that the trigger condition for one mobility candidate cell or beam is fulfilled, a transmitter, in operation, further transmits a measurement report to its serving base station, optionally wherein transmitting the measurement report is performed according to one or more of:
∘ before or after performing the early downlink synchronization, and
∘ before or after performing an early uplink synchronization, and
optionally wherein the measurement report includes results of measurements performed by the UE on reference signals received from one or more mobility candidate cells or beams.

9. The UE according to any one of claims 1 to 8, further comprising a receiver of the UE, which in operation, receives from a service base station of the UE a mobility configuration, defining the one or more trigger conditions,
wherein the one or more trigger conditions are defined for:
∘ performing early synchronization with mobility candidate cells or beams, or
∘ participating in a cell switch, optionally wherein at least the early downlink synchronization is performed before executing the cell switch, or
∘ executing a conditional cell-switch, optionally wherein at least the early downlink synchronization is performed before executing the conditional cell switch.

10. The UE according to any one of claims 1 to 9, wherein early downlink synchronization is performed during or after a time-to-trigger duration, during which the UE continues to evaluate whether the trigger condition is fulfilled for a minimum amount of time or a minimum number of times, or
wherein performing the downlink synchronization with a mobility candidate cell or beam involves at least one of performing a time synchronization and a frequency synchronization with the mobility candidate cell or beam.

11. A base station comprising:
processing circuitry, which in operation, determines whether to configure a user equipment to allow the UE to perform an early uplink synchronization in response to successfully completing an early downlink synchronization with mobility candidate cells or beams or to configure the UE to request an indication to perform an early uplink synchronization from the base station,
the processing circuitry, which in operation, generates configuration information according to the determination, and
a transceiver, which in operation, transmits the generated configuration information to the UE.

12. The base station according to claim 11, wherein the determining how to configure the UE is based on network conditions of mobility candidate cells or beams available for mobility of the UE.

13. The base station according to claim 11 or 12, wherein the transceiver, in operation, receives from the UE a request to perform an early uplink synchronization for one or more mobility candidate cells or beams,
wherein the processing circuitry, in operation, determines whether to instruct the UE to perform an early uplink synchronization with a mobility candidate cell or beam, and
wherein the transceiver, in operation, transmits an early uplink synchronization trigger to the UE for one or more of the mobility candidate cells or beams indicated in the early uplink synchronization request.

14. The base station according to any one of claims 11 to 13, wherein the transceiver, in operation and in response to receiving from the UE a request to perform an early UL synchronization, transmits a request to a mobility candidate cell to activate radio resources for a random access procedure to be performed by the UE with the mobility candidate cell for performing early uplink synchronization,
wherein the transceiver, in operation, receives, from the mobility candidate cell, a request response confirming the activation of the radio resources,
wherein the transceiver, in operation, transmits, to the UE, an early uplink synchronization trigger to indicate that early uplink synchronization is to be performed,
wherein the early uplink synchronization trigger further comprises an activation command for activating the radio resources for performing the random access procedure previously configured at the UE,
optionally wherein the early uplink synchronization trigger radio resources comprises a preamble to be transmitted by the UE in the first message of the random access procedure.

15. A method comprising the following steps performed by a user equipment, UE:
evaluating one or more trigger conditions for one or more mobility candidate cells or beams, in response to evaluating that a trigger condition for a mobility candidate cell or beam is fulfilled, performing an early downlink synchronization with said mobility candidate cell or beam, and
determining whether to perform an early uplink synchronization or request an indication to perform an early uplink synchronization based on configuration information from a serving base station of the UE,
in response to successfully completing the early downlink synchronization with said mobility candidate cells or beams and based on the determination, performing the early uplink synchronization or requests the indication from the serving base station.
